# EUROPEAN PATENT APPLICATION

(11) **EP 4 686 294 A1**
(43) Date of publication of application: **28.01.2026**
(21) Application number: 24774165.5
(22) Date of filing: 20.03.2024
(51) Int. Cl.: H04W 72/231

(54) **METHOD AND APPARATUS USED IN COMMUNICATION NODE FOR WIRELESS COMMUNICATION**

(30) Priority: 22.03.2023 CN 202310294332
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/082778
(87) International publication number: WO 2024/193600

(57) **Abstract**

Disclosed in the present application are a method and apparatus used in a communication node for wireless communication. A communication node receives a first RRC message, the first RRC message indicating a first waveform and a second waveform for an uplink of a first serving cell; and sends a first MAC subPDU, the first MAC subPDU comprising a first MAC CE and a first field. At least the first field of the first MAC subPDU among both the first field of the first MAC subPDU and the first RRC message is used for determining whether the first MAC CE comprises first-type power information of the first serving cell, and the first-type power information is related to at least the first waveform among the first waveform and the second waveform, the first waveform and the second waveform being different from each other. The solution provided by the present application reduces signaling overheads so as to reduce effects on PHR procedures of existing protocols.

## Description

### Technical Field

The present application relates to a transmission method and apparatus in a wireless communication system, and in particular to a transmission method and apparatus for reporting power information.

### Background Art

In the existing 3rd Generation Partnership Project (3GPP) protocols, the waveform used for an uplink (UL) is configured by radio resource control (RRC), resulting in insufficient flexibility in waveform switching. With the continuous evolution of wireless technology, the requirements for coverage, throughput and rate are getting higher and higher, and dynamic waveform switching has also attracted attention. For example, considering that uplink performance may become a bottleneck in most scenarios of actual deployment due to UL heavy traffic (e.g., video uploading) in some emerging vertical use cases, and that a DFT-S-OFDM waveform has a lower peak to average power ratio (PAPR) compared with a CP-OFDM waveform, which is advantageous for scenarios where uplink coverage is limited, the "Further NR Coverage Enhancements" work item (WI) approved at the 3GPP RAN#94 meeting takes dynamic switching between the DFT-S-OFDM waveform and the CP-OFDM waveform as an important research direction.

### Summary of the Invention

For power-sensitive packet scheduling, the 3GPP protocol supports a power headroom report (PHR), and the PHR is reported via a medium access control (MAC) control element (CE). PHR reporting of the existing protocol is related to a current waveform and unrelated to a target waveform, and it is difficult to ensure the impact of dynamic waveform switching on power by depending only on the PHR reporting of the existing protocol. A feasible solution is that if one RRC message received by user equipment (UE) indicates the current waveform and the target waveform for an uplink of one serving cell, the UE may send power information related to at least the target waveform that can comprise the serving cell to a base station. Further, how to determine whether the MAC CE sent by the UE comprises the power information related to at least the target waveform of the serving cell needs to be enhanced.

In view of the above problem, the present application provides a solution for power information reporting. In view of the above problem description, taking an NR system as one example, the present application is also applicable to scenarios such as a Long Term Evolution (LTE) system, achieving a similar technical effect to that of the NR system; and further, although the present application provides a specific implementation for dynamic switching of two waveforms, the present application can also be applied to scenarios such as dynamic switching among more than two waveforms, thereby achieving the technical effect similar to that of dynamic switching between two waveforms. Further, although the original intention of the present application is for a Uu interface, the present application can also be applied to a PC5 interface, thereby achieving the similar technical effect to that of the Uu interface. Further, although the original intention of the present application is for a terminal and base station scenario, the present application is also applicable to a Vehicle-to-Everything (V2X) scenario, a terminal and relay communication scenario, and a relay and base station communication scenario, thereby achieving the similar technical effect to that of the terminal and base station scenario. Further, although the original intention of the present application is for the terminal and base station scenario, the present application is also applicable to an integrated access and backhaul (IAB) communication scenario, thereby achieving the similar technical effect to that of the terminal and base station scenario. Further, although the original intention of the present application is for a Terrestrial Network (TN) scenario, the present application is also applicable to a Non-Terrestrial Network (NTN) communication scenario, thereby achieving the similar technical effect to that of the TN scenario. In addition, adopting a unified solution across different scenarios also helps reduce hardware complexity and cost.

As one embodiment, an interpretation of a terminology in the present application is made with reference to definitions of the 3GPP TS36 series specification protocol.

As one embodiment, the interpretation of the terminology in the present application is made with reference to the definitions of the 3GPP TS38 series specification protocol.

As one embodiment, the interpretation of the terminology in the present application is made with reference to the definitions of the 3GPP TS37 series specification protocol.

As one embodiment, the interpretation of the terminology in the present application is made with reference to the definitions of the Institute of Electrical and Electronics Engineers (IEEE) specification protocol.

It should be noted that in the absence of conflicts, embodiments and features in the embodiments in any node of the present application may be applied to any other node. In the absence of conflicts, the embodiments and features in the embodiments of the present application may be arbitrarily combined with each other.

The present application discloses a method used in a first node for wireless communication, characterized by comprising:
receiving a first RRC message, the first RRC message indicating a first waveform and a second waveform for an uplink of a first serving cell; and
sending a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information is related to at least the first waveform among both the first waveform and the second waveform; and the first waveform and the second waveform are different.

As one embodiment, problems to be solved in the present application comprise: how to determine whether the first MAC CE comprises the first-type power information of the first serving cell.

As one embodiment, the problems to be solved in the present application comprise: how to determine that the first MAC CE comprises the first-type power information related to at least the first waveform among both the first waveform and the second waveform.

As one embodiment, features of the above method comprise: at least the first field of the first MAC subPDU among both the first field of the first MAC subPDU and the first RRC message is used for determining that the first MAC CE comprises the first-type power information of the first serving cell.

As one embodiment, the features of the above method comprise: the first field of the first MAC subPDU is used for determining that the first MAC CE comprises the first-type power information of the first serving cell.

As one embodiment, the features of the above method comprise: the first RRC message is used for determining that the first MAC CE comprises the first-type power information of the first serving cell.

As one embodiment, the features of the above method comprise: both the first field of the first MAC subPDU and the first RRC message are used for determining that the first MAC CE comprises the first-type power information of the first serving cell.

As one embodiment, benefits of the above method comprise: reducing signaling overhead.

As one embodiment, the benefits of the above method comprise: avoiding the impact on the PHR process of an existing protocol.

As one embodiment, the benefits of the above method comprise: reducing signaling overhead by optimizing triggering conditions.

As one embodiment, the benefits of the above method comprise: avoiding too early or too late waveform switching.

According to one aspect of the present application, the method is characterized by comprising:
receiving first downlink control information (DCI), the first DCI being used for scheduling a physical uplink shared channel (PUSCH),
wherein the first DCI comprises a second field, the second field indicating that the second waveform is used for the PUSCH scheduled by the first DCI.

According to one aspect of the present application, the method is characterized by comprising:
a first timer having expired,
wherein the first timer having expired is used for triggering a behavior of sending the first MAC subPDU.

According to one aspect of the present application, the method is characterized by comprising:
receiving a first threshold,
wherein a first power value being not better than the first threshold is used for triggering the behavior of sending the first MAC subPDU; and only the former of the first waveform and the second waveform is used for determining the first power value.

According to one aspect of the present application, the method is characterized by comprising:
receiving a second threshold,
wherein a second power value being not worse than the second threshold is used for triggering the behavior of sending the first MAC subPDU; and only the latter of the first waveform and the second waveform is used for determining the second power value.

According to one aspect of the present application, the method is characterized by comprising:
receiving a third threshold,
wherein the second power value being better than the third threshold compared with the first power value is used for triggering the behavior of sending the first MAC subPDU; and only the former of the first waveform and the second waveform is used for determining the first power value, and only the latter of the first waveform and the second waveform is used for determining the second power value.

According to one aspect of the present application, the method is characterized by comprising:
triggering at least one PHR,
wherein the behavior of triggering at least one PHR is used for triggering the behavior of sending the first MAC subPDU.

According to one aspect of the present application, the method is characterized by comprising:
canceling at least one triggered PHR along with the behavior of sending the first MAC subPDU.

According to one aspect of the present application, the method is characterized in that a logical channel prioritization (LCP) priority of the first MAC CE is different from an LCP priority of a second MAC CE; and an index of a logical channel ID (LCID) corresponding to the second MAC CE is equal to 57.

The present application discloses a method used in a second node for wireless communication, characterized by comprising:
sending a first RRC message, the first RRC message indicating a first waveform and a second waveform for an uplink of a first serving cell; and
receiving a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

According to one aspect of the present application, the method is characterized by comprising:
receiving first DCI, the first DCI being used for scheduling a PUSCH,
wherein the first DCI comprises a second field, the second field indicating that the second waveform is used for the PUSCH scheduled by the first DCI.

According to one aspect of the present application, the method is characterized in that a first timer having expired is used for triggering a behavior of sending the first MAC subPDU.

According to one aspect of the present application, the method is characterized by comprising:
sending a first threshold,
wherein a first power value being not better than the first threshold is used for triggering the behavior of sending the first MAC subPDU; and only the former of the first waveform and the second waveform is used for determining the first power value.

According to one aspect of the present application, the method is characterized by comprising:
sending a second threshold,
wherein a second power value being not worse than the second threshold is used for triggering the behavior of sending the first MAC subPDU; and only the latter of the first waveform and the second waveform is used for determining the second power value.

According to one aspect of the present application, the method is characterized by comprising:
sending a third threshold,
wherein the second power value being better than the third threshold compared with the first power value is used for triggering the behavior of sending the first MAC subPDU; and only the former of the first waveform and the second waveform is used for determining the first power value, and only the latter of the first waveform and the second waveform is used for determining the second power value.

According to one aspect of the present application, the method is characterized in that at least one PHR is triggered; and the behavior of triggering at least one PHR is used for triggering the behavior of sending the first MAC subPDU.

According to one aspect of the present application, the method is characterized in that at least one triggered PHR is canceled along with the first MAC subPDU being sent.

According to one aspect of the present application, the method is characterized in that an LCP priority of the first MAC CE is different from an LCP priority of a second MAC CE; and an index of an LCID corresponding to the second MAC CE is equal to 57.

The present application discloses a first node for wireless communication, characterized by comprising:
a first receiver receiving a first RRC message, the first RRC message indicating a first waveform and a second waveform for an uplink of a first serving cell; and
a first transmitter sending a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

The present application discloses a second node for wireless communication, characterized by comprising:
a second transmitter sending a first RRC message, the first RRC message indicating a first waveform and a second waveform for an uplink of a first serving cell; and
a second receiver receiving a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

As one embodiment, compared with a traditional solution, the present application has the following advantages:
- . Reduce signaling overhead by optimizing a signaling format;
- . Reduce signaling overhead by optimizing triggering conditions;
- . Avoid too early or too late waveform switching; and
- . Avoid the impact on the PHR process of an existing protocol.

### Brief Description of the Drawings

Other features, objectives and advantages of the present application will become more apparent by reading the detailed description of non-limiting embodiments with reference to the following drawings:
FIG. 1 shows a flowchart of a transmission of a first RRC message and a first MAC subPDU according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of wireless signal transmission according to another embodiment of the present application;
FIG. 7 shows a flowchart in which a first timer having expired is used for triggering sending of a first MAC subPDU according to one embodiment of the present application;
FIG. 8 shows a flowchart in which triggering at least one PHR is used for triggering sending of the first MAC subPDU according to one embodiment of the present application;
FIG. 9 shows a flowchart of triggering at least one first-type power information report is used for triggering sending of the first MAC subPDU according to one embodiment of the present application;
FIG. 10 shows a schematic diagram in which an LCP priority of a first MAC CE and an LCP priority of a second MAC CE are different according to one embodiment of the present application;
FIG. 11 shows a schematic diagram of a bitmap in a first MAC CE according to one embodiment of the present application;
FIG. 12 shows a schematic diagram of first-type power information of a first serving cell according to one embodiment of the present application;
FIG. 13 shows a schematic diagram of first-type power information of a first serving cell according to another embodiment of the present application;
FIG. 14 shows a schematic diagram of a first MAC CE according to one embodiment of the present application;
FIG. 15 shows a structural block diagram of a processing apparatus used in a first node according to one embodiment of the present application; and
FIG. 16 shows a structural block diagram of a processing apparatus used in a second node according to one embodiment of the present application.

### Detailed Description of Embodiments

The technical solution of the present application will be further described in detail below in conjunction with the drawings. It should be noted that, in the absence of conflicts, embodiments and features in the embodiments of the present application may be arbitrarily combined with each other.

### Embodiment 1

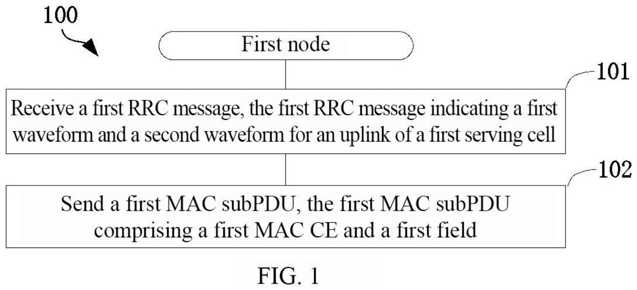

Embodiment 1 illustrates a flowchart of a transmission of a first RRC message and a first MAC subPDU according to one embodiment of the present application, as shown in FIG. 1. In FIG. 1, each box represents one step. It should be particularly noted that the sequence of the boxes in the figure does not represent a chronological order of the steps represented by the boxes.

In Embodiment 1, a first node in the present application receives the first RRC message in step 101, and the first RRC message indicates a first waveform and a second waveform for an uplink of a first serving cell; and send the first MAC subPDU in step 102, the first MAC subPDU comprising a first MAC CE and a first field, wherein at least the first field of the first MAC subPDU among both the first field of the first MAC subPDU and the first RRC message is used for determining that the first MAC CE comprises first-type power information of the first serving cell, and the first-type power information of the first serving cell is related to at least the first waveform among both the first waveform and the second waveform; and the first waveform and the second waveform are different.

As one embodiment, a reception time of the first RRC message is not later than a reception time of the first MAC subPDU.

As one embodiment, the reception time of the first RRC message is earlier than the reception time of the first MAC subPDU.

As one embodiment, the first RRC message is one public message.

As one embodiment, the first RRC message is one UE-specific message.

As one embodiment, the first RRC message comprises one RRCReconfiguration message.

As one embodiment, the first RRC message comprises one RRCResume message.

As one embodiment, the first RRC message comprises one RRCSetup message.

As one embodiment, the first RRC message comprises one CellGroupConfig IE.

As one embodiment, the first RRC message comprises one MAC-CellGroupConfig IE.

As one embodiment, the first RRC message comprises one PHR-Config IE.

As one embodiment, the first RRC message explicitly indicates the first waveform and the second waveform for the uplink of the first serving cell.

As one embodiment, the first RRC message implicitly indicates the first waveform and the second waveform for the uplink of the first serving cell.

As one embodiment, the first RRC message enables dynamic waveform switching between the first waveform and the second waveform of the uplink of the first serving cell.

As one embodiment, a phrase "the first RRC message enables dynamic waveform switching between the first waveform and the second waveform of the uplink of the first serving cell" comprises: the first RRC message enables dynamic waveform switching between the first waveform and the second waveform of the first node; and the first RRC message enabling dynamic waveform switching between the first waveform and the second waveform of the first node is used for determining that the first RRC message enables dynamic waveform switching between the first waveform and the second waveform of the uplink of the first serving cell.

As one embodiment, the phrase "the first RRC message enables dynamic waveform switching between the first waveform and the second waveform of the uplink of the first serving cell" comprises: the first RRC message enables dynamic waveform switching between the first waveform and the second waveform of at least one serving cell of the first node; and the first RRC message enabling dynamic waveform switching between the first waveform and the second waveform of at least one serving cell of the first node is used for determining that the first RRC message enables dynamic waveform switching between the first waveform and the second waveform of the uplink of the first serving cell.

As one embodiment, the phrase "the first RRC message enables dynamic waveform switching between the first waveform and the second waveform of the uplink of the first serving cell" comprises: the first RRC message enables dynamic waveform switching between the first waveform and the second waveform of an uplink of a cell group to which the first serving cell belongs; and the first RRC message enabling dynamic waveform switching between the first waveform and the second waveform of the uplink of the cell group to which the first serving cell belongs is used for determining that the first RRC message enables dynamic waveform switching between the first waveform and the second waveform of the uplink of the first serving cell.

As one embodiment, a first RRC field in the first RRC message is used for determining a format of the first MAC CE.

As one embodiment, the first RRC field in the first RRC message is used for determining that the first MAC CE comprises the first-type power information of the first serving cell.

As one embodiment, the first RRC message comprises the first RRC field being used for determining that the first RRC message enables dynamic waveform switching between the first waveform and the second waveform of the uplink of the first serving cell.

As one embodiment, the first RRC field in the first RRC message is set to be used for determining that the first RRC message enables dynamic waveform switching between the first waveform and the second waveform of the uplink of the first serving cell.

As one embodiment, the first RRC field in the first RRC message is configured to be used for determining that the first RRC message enables dynamic waveform switching between the first waveform and the second waveform of the uplink of the first serving cell.

As one embodiment, the first RRC message comprises the first RRC field, and the first RRC field is set to a first value to be used for determining that the first RRC message enables dynamic waveform switching between the first waveform and the second waveform of the uplink of the first serving cell.

As one embodiment, the first RRC field is configured for the first serving cell.

As one embodiment, the first RRC field is configured for at least one serving cell.

As one embodiment, the first RRC field is configured for the cell group to which the first serving cell belongs.

As one embodiment, "the first RRC field in the first RRC message is set" refers to: the first RRC field in the first RRC message is set to setup.

As one embodiment, "the first RRC field in the first RRC message is set" refers to: the first RRC field in the first RRC message is set to setup among both setup and release.

As one embodiment, the first value is one character string.

As one embodiment, the first value is one non-negative integer.

As one embodiment, the first value is ture.

As one embodiment, the first value is 1.

As one embodiment, a name of the first RRC field comprises at least one of wave, or form, or waveform, or switch, or dynamic, or phr, or other, or Mode.

As one embodiment, the first serving cell is one Primary Cell (PCell), and the cell group to which the first serving cell belongs is a Master Cell Group (MCG).

As one embodiment, the first serving cell is one Primary SCG Cell (PSCell), and the cell group to which the first serving cell belongs is a Secondary Cell Group (SCG).

As one embodiment, the first serving cell is one Secondary Cell (SCell), and the cell group to which the first serving cell belongs is the MCG.

As one embodiment, the first serving cell is one SCell, and the cell group to which the first serving cell belongs is the SCG.

As one embodiment, the first MAC CE is one PHR MAC CE.

As one embodiment, the first MAC CE is one MAC CE for the first-type power information.

As one embodiment, the first MAC CE is one MAC CE for at least the first-type power information.

As one embodiment, the first MAC CE is one MAC CE for the first-type power information and second-type power information.

As one embodiment, the first MAC CE is used for reporting at least the first-type power information.

As one embodiment, the first MAC CE is used for reporting the first-type power information and the second-type power information.

As one embodiment, the first MAC CE is indicated by one candidate LCID index in a first candidate LCID index set.

As one embodiment, the first MAC CE is indicated by one candidate LCID index in a second candidate LCID index set.

As one embodiment, the first MAC CE is indicated by one candidate LCID index in the second candidate LCID index set; and an LCP priority of the first MAC CE is the same as an LCP priority of the MAC CE whose corresponding LCID index is equal to 57.

As one embodiment, the first MAC CE indicates only the PCell.

As one embodiment, the first MAC CE indicates only the PCell and at least one SCell.

As one embodiment, the first MAC CE indicates the PCell, the PSCell, and at least one SCell.

As one embodiment, the first MAC CE comprises a first bitmap.

As one sub-embodiment of the present embodiment, an octet to which the first bitmap belongs consists of the first bitmap and one R field.

As one sub-embodiment of the present embodiment, the octet to which the first bitmap belongs consists of the first bitmap and one B₁ field.

As one embodiment, the first MAC CE comprises the first bitmap and a second bitmap.

As one sub-embodiment of the present embodiment, the octet to which the first bitmap belongs consists of the first bitmap and one R field, and the octet to which the second bitmap belongs consists of the second bitmap and one R field.

As one sub-embodiment of the present embodiment, the octet to which the first bitmap belongs consists of the first bitmap and one B₁ field, and the octet to which the second bitmap belongs consists of the second bitmap and one B₂ field.

As one sub-embodiment of the present embodiment, the octet to which the first bitmap belongs consists of the first bitmap and one B₁ field, and the octet to which the second bitmap belongs consists of the second bitmap and one R field.

As one sub-embodiment of the present embodiment, the octet to which the first bitmap belongs consists of the first bitmap and one R field, and the octet to which the second bitmap belongs consists of the second bitmap and one B₂ field.

As one embodiment, the first MAC CE does not comprise any one of the first bitmap and the second bitmap.

As one embodiment, each bit in the first bitmap corresponds to one serving cell.

As one embodiment, the serving cell corresponding to each bit in the first bitmap depends on a ServCellIndex.

As one embodiment, a position of each bit in the first bitmap is used for determining the serving cell corresponding to the each bit.

As one embodiment, a size of the first bitmap is fixed.

As one embodiment, the size of the first bitmap is variable.

As one embodiment, the first bitmap consists of at least one Cₘ field.

As one embodiment, the Cₘ field in the first bitmap indicates a serving cell where the ServCellIndex is equal to m.

As one embodiment, the first bitmap is one single octet bitmap.

As one embodiment, the first bitmap belongs to one single octet bitmap.

As one embodiment, the first bitmap belongs to 1 octet.

As one embodiment, the size of the first bitmap is 7 bits.

As one embodiment, the first bitmap is one four octet bitmap.

As one embodiment, the first bitmap belongs to one four octet bitmap.

As one embodiment, the first bitmap belongs to 4 octets.

As one embodiment, the size of the first bitmap is 31 bits.

As one embodiment, the first bitmap consists of 7 Cₘ fields.

As one embodiment, the first bitmap consists of 31 Cₘ fields.

As one embodiment, one bit in the octet to which the first bitmap belongs is not the Cₘ field.

As one embodiment, one bit that is not the Cₘ field in the octet to which the first bitmap belongs is one R field.

As one embodiment, one bit that is not the Cₘ field in the octet to which the first bitmap belongs is one B₁ field.

As one embodiment, the octet to which the first bitmap belongs consists of the first bitmap and one R field.

As one embodiment, the octet to which the first bitmap belongs consists of the first bitmap and one B₁ field.

As one embodiment, each bit in the second bitmap corresponds to one serving cell.

As one embodiment, the serving cell corresponding to each bit in the second bitmap depends on the ServCellIndex.

As one embodiment, the position of each bit in the second bitmap is used for determining the serving cell corresponding to the each bit.

As one embodiment, the size of the second bitmap is fixed.

As one embodiment, the size of the second bitmap is variable.

As one sub-embodiment of the present embodiment, the size of the second bitmap depends on the number of serving cells for which dynamic waveform switching is enabled.

As one sub-embodiment of the present embodiment, the size of the second bitmap depends on the number of bits set to 1 in the first bitmap.

As one sub-embodiment of the present embodiment, the size of the second bitmap depends on the number of bits set to 1 in the octet to which the first bitmap belongs.

As one embodiment, the second bitmap consists of at least one Aₙ field.

As one embodiment, the Aₙ field in the second bitmap indicates the serving cell where the ServCellIndex is equal to n.

As one embodiment, the second bitmap is one single octet bitmap.

As one embodiment, the second bitmap belongs to one single octet bitmap.

As one embodiment, the second bitmap belongs to 1 octet.

As one embodiment, the size of the second bitmap is 7 bits.

As one embodiment, the second bitmap consists of 7 Aₙ fields.

As one embodiment, the second bitmap is one four octet bitmap.

As one embodiment, the second bitmap belongs to one four octave bitmap.

As one embodiment, the second bitmap belongs to 4 octet.

As one embodiment, the size of the second bitmap is 31 bits.

As one embodiment, the second bitmap consists of 31 Aₙ fields.

As one embodiment, one bit in the octet to which the second bitmap belongs is not the Aₙ field.

As one embodiment, one bit that is not the Aₙ field in the octet to which the second bitmap belongs is one R field.

As one embodiment, one bit that is not the Aₙ field in the octet to which the second bitmap belongs is one B₂ field.

As one embodiment, the octet to which the second bitmap belongs consists of the second bitmap and one R field.

As one embodiment, the octet to which the second bitmap belongs consists of the second bitmap and one B₂ field.

As one embodiment, the size of the first bitmap is fixed, and the size of the second bitmap is fixed.

As one embodiment, the size of the first bitmap is fixed, and the size of the second bitmap is variable.

As one embodiment, the size of the first bitmap is variable, and the size of the second bitmap is variable.

As one embodiment, the size of the second bitmap is not greater than the size of the first bitmap.

As one embodiment, the size of the second bitmap is equal to the size of the first bitmap.

As one embodiment, the first field of the first MAC subPDU is a first subfield in a first MAC subheader; and the first serving cell is the PCell.

As one sub-embodiment of the present embodiment, the first MAC CE comprises the first bitmap.

As one sub-embodiment of the present embodiment, the first MAC CE comprises the first bitmap and the second bitmap.

As one sub-embodiment of the present embodiment, the first MAC CE does not comprise any one of the first bitmap and the second bitmap.

As one sub-embodiment of the present embodiment, the first subfield in the first MAC subheader indicates that one candidate LCID index in the second candidate LCID index set is used for determining that the first MAC CE comprises the first-type power information of the first serving cell.

As one embodiment, the first field of the first MAC subPDU is the first subfield in the first MAC subheader and a second subfield in the first MAC CE; and the first serving cell is the PCell.

As one sub-embodiment of the present embodiment, the first MAC CE comprises the first bitmap.

As one sub-embodiment of the present embodiment, the first subfield in the first MAC subheader indicates one candidate LCID index in the first candidate LCID index set, and the second subfield in the first MAC CE is set to 1 to be used for determining that the first MAC CE comprises the first-type power information of the first serving cell.

As one embodiment, the first field of the first MAC subPDU is the first subfield in the first MAC subheader and the second subfield in the first MAC CE; and the first serving cell is the PCell.

As one sub-embodiment of the present embodiment, the first MAC CE comprises the first bitmap.

As one sub-embodiment of the present embodiment, the first MAC CE comprises the first bitmap and the second bitmap.

As one sub-embodiment of the present embodiment, the first subfield in the first MAC subheader indicates one candidate LCID index in the second candidate LCID index set, and the second subfield in the first MAC CE is set to 1 to be used for determining that the first MAC CE comprises the first-type power information of the first serving cell.

As one embodiment, the first field of the first MAC subPDU is the first subfield in the first MAC subheader; and the first serving cell is the PSCell.

As one sub-embodiment of the present embodiment, the first MAC CE comprises the first bitmap.

As one sub-embodiment of the present embodiment, the first MAC CE comprises the first bitmap and the second bitmap.

As one sub-embodiment of the present embodiment, the first subfield in the first MAC subheader indicates that one candidate LCID index in the second candidate LCID index set is used for determining that the first MAC CE comprises the first-type power information of the first serving cell.

As one embodiment, the first field of the first MAC subPDU is the first subfield in the first MAC subheader and a fifth subfield in the first MAC CE; and the first serving cell is the PSCell.

As one sub-embodiment of the present embodiment, the first MAC CE comprises the first bitmap and the second bitmap.

As one sub-embodiment of the present embodiment, the first subfield in the first MAC subheader indicates one candidate LCID index in the second candidate LCID index set, and the fifth subfield in the first MAC CE is set to 1 to be used for determining that the first MAC CE comprises the first-type power information of the first serving cell.

As one embodiment, the first field of the first MAC subPDU is the first subfield in the first MAC subheader and a third subfield in the first MAC CE; and the first serving cell is the SCell.

As one sub-embodiment of the present embodiment, the first MAC CE comprises the first bitmap.

As one sub-embodiment of the present embodiment, the first subfield in the first MAC subheader indicates one candidate LCID index in the second candidate LCID index set, and the third subfield in the first MAC CE is set to 1 to be used for determining that the first MAC CE comprises the first-type power information of the first serving cell.

As one embodiment, the first field of the first MAC subPDU is the first subfield in the first MAC subheader, the second subfield in the first MAC CE, and the third subfield in the first MAC CE; and the first serving cell is the SCell.

As one sub-embodiment of the present embodiment, the first MAC CE comprises the first bitmap.

As one sub-embodiment of the present embodiment, the first subfield in the first MAC subheader indicates one candidate LCID index in the first candidate LCID index set, the second subfield in the first MAC CE is set to 1, and the third subfield in the first MAC CE is set to 1 to be used for determining that the first MAC CE comprises the first-type power information of the first serving cell.

As one embodiment, the first field of the first MAC subPDU is the first subfield in the first MAC subheader, the third subfield in the first MAC CE, and a fourth subfield in the first MAC CE; and the first serving cell is the SCell.

As one sub-embodiment of the present embodiment, the first MAC CE comprises the first bitmap and the second bitmap.

As one sub-embodiment of the present embodiment, the first subfield in the first MAC subheader is set to one candidate LCID index in the second candidate LCID index set, the third subfield in the first MAC CE is set to 1, and the fourth subfield in the first MAC CE is set to 1 to be used for determining that the first MAC CE comprises the first-type power information of the first serving cell.

As one embodiment, the first subfield in the first MAC subheader is one LCID field.

As one embodiment, the first subfield in the first MAC subheader is one extended LCID (eLCID) field.

As one embodiment, the second subfield in the first MAC CE is one bit.

As one embodiment, the second subfield in the first MAC CE is one field of the octet to which the first bitmap belongs.

As one embodiment, the second subfield in the first MAC CE is one bit at the rightmost side of a first octet among octets to which the first bitmap belongs.

As one embodiment, the second subfield in the first MAC CE is one bit at the rightmost side of the first octet in the first MAC CE.

As one embodiment, the second subfield in the first MAC CE is the B₁ field in the first bitmap.

As one embodiment, the fifth subfield in the first MAC CE is one bit.

As one embodiment, the fifth subfield in the first MAC CE is one field in the octet to which the second bitmap belongs.

As one embodiment, the fifth subfield in the first MAC CE is one bit at the rightmost side of the first octet to which the second bitmap belongs.

As one embodiment, the fifth subfield in the first MAC CE is the B₂ field in the second bitmap.

As one embodiment, the third subfield in the first MAC CE is one bit.

As one embodiment, the third subfield in the first MAC CE is one bit in the first bitmap.

As one embodiment, the third subfield in the first MAC CE is one Cₘ field in the first bitmap.

As one embodiment, the third subfield in the first MAC CE is the Cₘ field corresponding to the first serving cell in the first bitmap.

As one embodiment, the fourth subfield in the first MAC CE is one bit.

As one embodiment, the fourth subfield in the first MAC CE is one bit in the second bitmap.

As one embodiment, the fourth subfield in the first MAC CE is one Aₙ field in the second bitmap.

As one embodiment, the fourth subfield in the first MAC CE is the Aₙ field corresponding to the first serving cell in the second bitmap.

As one embodiment, the MAC CE indicated by any candidate LCID index in the first candidate LCID index set is used for a PHR.

As one embodiment, the MAC CE indicated by any candidate LCID index in the first candidate LCID index set can be used for indicating the second-type power information.

As one embodiment, the MAC CE indicated by any candidate LCID index in the first candidate LCID index set can be used for indicating the second-type power information of at least the PCell.

As one embodiment, the first candidate LCID index set comprises 54, 56, 57, 293, 24, 295, 296, 297, and 298.

As one embodiment, the MAC CE indicated by any candidate LCID index in the second candidate LCID index set is used for indicating the first-type power information.

As one embodiment, the MAC CE indicated by any candidate LCID index in the second candidate LCID index set is used for indicating the first-type power information of at least the PCell.

As one embodiment, the second candidate LCID index set does not comprise any one of 54, 56, 57, 293, 24, 295, 296, 297, and 298.

As one embodiment, the first-type power information is a PH calculated based on a target waveform.

As one embodiment, the first-type power information is P_{CMAX,f,c} calculated based on the target waveform.

As one embodiment, the first-type power information comprises the PH calculated based on the target waveform.

As one embodiment, the first-type power information comprises P_{CMAX,f,c} calculated based on the target waveform.

As one embodiment, the first-type power information comprises the PH calculated based on the target waveform and P_{CMAX,f,c} calculated based on the target waveform.

As one embodiment, the first-type power information of the first serving cell is the PH of the first serving cell calculated based on the second waveform.

As one embodiment, the first-type power information of the first serving cell is P_{CMAX,f,c} of the first serving cell calculated based on the second waveform.

As one embodiment, the first-type power information of the first serving cell comprises the PH of the first serving cell calculated based on the second waveform and P_{CMAX,f,c} of the first serving cell calculated based on the second waveform.

As one embodiment, the second-type power information is the PH calculated based on a current waveform.

As one embodiment, the second-type power information is P_{CMAX,f,c} calculated based on the current waveform.

As one embodiment, the second-type power information comprises the PH calculated based on the current waveform.

As one embodiment, the second-type power information comprises the P_{CMAX,f,c} calculated based on the current waveform.

As one embodiment, the second-type power information comprises the PH calculated based on the current waveform and P_{CMAX,f,c} calculated based on the current waveform.

As one embodiment, the second-type power information of the first serving cell is the PH of the first serving cell calculated based on the first waveform.

As one embodiment, the second-type power information of the first serving cell is P_{CMAX,f,c} of the first serving cell calculated based on the first waveform.

As one embodiment, the second-type power information of the first serving cell comprises the PH of the first serving cell calculated based on the first waveform and P_{CMAX,f,c} of the first serving cell calculated based on the first waveform.

As one embodiment, a behavior of sending the first MAC subPDU comprises: submitting one MAC protocol data unit (MAC PDU), and the one MAC PDU comprises the first MAC subPDU.

As one embodiment, the behavior of sending the first MAC subPDU comprises: sending one MAC PDU, the one MAC PDU comprising the first MAC subPDU.

As one embodiment, the behavior of sending the first MAC subPDU comprises: generating the first MAC CE.

As one embodiment, the behavior of sending the first MAC subPDU comprises an indication that the multiplexing and assembly procedure generates and sends the first MAC CE.

As one embodiment, any triggered PHR is not canceled along with the behavior of sending the first MAC subPDU.

As one embodiment, at least one triggered PHR is canceled along with the behavior of sending the first MAC subPDU.

As one embodiment, a phrase "along with the behavior of sending the first MAC subPDU" refers to: immediately following the behavior of indicating the multiplexing and assembly procedure to generate and send the first MAC CE.

As one embodiment, the phrase "along with the behavior of sending the first MAC subPDU" refers to: immediately following the behavior of indicating the multiplexing and assembly procedure to generate and send the first MAC CE.

As one embodiment, the phrase "along with the behavior of sending the first MAC subPDU" refers to: after the behavior of indicating the multiplexing and assembly procedure to generate and send the first MAC CE.

As one embodiment, the phrase "along with the behavior of sending the first MAC subPDU" refers to: in response to the sending of the first MAC CE.

As one embodiment, the first MAC subPDU consists of the first MAC CE and the first MAC subheader.

As one embodiment, the first field in the first MAC subPDU belongs to the first MAC CE.

As one embodiment, the first field in the first MAC subPDU belongs to the first MAC subheader.

As one embodiment, the first field in the first MAC subPDU belongs to the first MAC CE and the first MAC subheader.

As one embodiment, the first field in the first MAC subPDU is at least one bit.

As one embodiment, the first field in the first MAC subPDU is one bit.

As one embodiment, the first field in the first MAC subPDU is 4 bits.

As one embodiment, the first field in the first MAC subPDU indicates an LCID index of the first MAC CE.

As one embodiment, the first field in the first MAC subPDU indicates an eLCID index of the first MAC CE.

As one embodiment, the first field in the first MAC subPDU indicates that the first serving cell meets triggering conditions for waveform switching.

As one embodiment, the first field in the first MAC subPDU indicates that the first MAC CE comprises the first-type power information of the first serving cell.

As one embodiment, the first field of the first MAC subPDU is one LCID field.

As one embodiment, the first field of the first MAC subPDU is one eLCID field.

As one embodiment, the first field of the first MAC subPDU is one B₁ field.

As one embodiment, the first field of the first MAC subPDU is one B₂ field.

As one embodiment, the first field of the first MAC subPDU is one Cₘ field.

As one embodiment, the first field of the first MAC subPDU is one Aₙ field.

As one embodiment, at least the first field of the first MAC subPDU among both the first field of the first MAC subPDU and the first RRC message is used by a second node for determining that the first MAC CE comprises the first-type power information of the first serving cell.

As one embodiment, at least the first field of the first MAC subPDU among both the first field of the first MAC subPDU and the first RRC message is used for indicating that the first MAC CE comprises the first-type power information of the first serving cell.

As one embodiment, the first MAC CE comprises the first-type power information of the first serving cell, and is related to at least the first field of the first MAC subPDU among both the first field of the first MAC subPDU and the first RRC message.

As one embodiment, the second node determines whether the first MAC CE comprises the first-type power information of the first serving cell based on at least the first field of the first MAC subPDU among both the first field of the first MAC subPDU and the first RRC message.

As one embodiment, the setting of the first field of the first MAC subPDU depends on the first RRC message and whether the first MAC CE indicates the first-type power information of the first serving cell.

As one embodiment, the first node sets the first field of the first MAC subPDU based on the first RRC message and whether the first MAC CE indicates the first-type power information of the first serving cell.

As one embodiment, only the first field of the first MAC subPDU among both the first field of the first MAC subPDU and the first RRC message is used for determining that the first MAC CE comprises the first-type power information of the first serving cell.

As one sub-embodiment of the present embodiment, the first field of the first MAC subPDU indicates that the first MAC CE comprises the first-type power information of the first serving cell.

As one sub-embodiment of the present embodiment, the first field of the first MAC subPDU is used by the second node for determining that the first MAC CE comprises the first-type power information of the first serving cell.

As one embodiment, both the first field of the first MAC subPDU and the first RRC message are used for determining that the first MAC CE comprises the first-type power information of the first serving cell.

As one sub-embodiment of the present embodiment, both the first field of the first MAC subPDU and the first RRC message indicate that the first MAC CE comprises the first-type power information of the first serving cell.

As one sub-embodiment of the present embodiment, both the first field of the first MAC subPDU and the first RRC message are used by the second node for determining that the first MAC CE comprises the first-type power information of the first serving cell.

As one embodiment, "the first field of the first MAC subPDU is used for determining that the first MAC CE comprises the first-type power information of the first serving cell" means that the first field of the first MAC subPDU is set to a target value to be used for determining that the first MAC CE comprises the first-type power information of the first serving cell.

As one embodiment, the target value is predefined.

As one embodiment, the target value is preconfigured.

As one embodiment, the target value is 1.

As one embodiment, the target value is one LCID index in the first candidate LCID index set.

As one embodiment, "the first RRC message is used for determining that the first MAC CE comprises the first-type power information of the first serving cell" means that the first RRC message indicates the first waveform and the second waveform for the uplink of the first serving cell and is used for determining that the first MAC CE comprises the first-type power information of the first serving cell.

As one embodiment, "the first RRC message is used for determining that the first MAC CE comprises the first-type power information of the first serving cell" means that the first RRC message enables dynamic waveform switching between the first waveform and the second waveform for the uplink of the first serving cell and is used for determining that the first MAC CE comprises the first-type power information of the first serving cell.

As one embodiment, when the first RRC message indicates the first waveform and the second waveform for the uplink of the first serving cell, the first field of the first MAC subPDU is used for determining that the first MAC CE comprises the first-type power information of the first serving cell.

As one embodiment, only when the first RRC message indicates the first waveform and the second waveform for the uplink of the first serving cell, the first field of the first MAC subPDU is used for determining that the first MAC CE comprises the first-type power information of the first serving cell.

As one embodiment, the first RRC message indicates the first waveform and the second waveform for the uplink of the first serving cell, and the first field of the first MAC subPDU is set to the target value to be used for determining that the first MAC CE comprises the first-type power information of the first serving cell.

As one embodiment, if the first RRC message indicates the first waveform and the second waveform for the uplink of the first serving cell, and the first field of the first MAC subPDU is set to the target value, the first MAC CE comprises the first-type power information of the first serving cell.

As one embodiment, the first MAC CE comprises the first-type power information of the first serving cell, and the first MAC CE comprises the second-type power information of the first serving cell.

As one embodiment, the first MAC CE comprises the first-type power information of the first serving cell, and the first MAC CE does not comprise the second-type power information of the first serving cell.

As one embodiment, the first-type power information of the first serving cell depends on only the former of the first waveform and the second waveform; and the second-type power information of the first serving cell depends on at least the latter of the first waveform and the second waveform.

As one embodiment, the first-type power information of the first serving cell is related to only the second waveform among both the first waveform and the second waveform.

As one embodiment, the first-type power information of the first serving cell is related to both the first waveform and the second waveform.

As one embodiment, one piece of the first-type power information comprises a power headroom.

As one embodiment, one piece of the first-type power information comprises a power headroom offset.

As one embodiment, one piece of the first-type power information comprises the power headroom offset and P_{CMAX,f,c}.

As one embodiment, one piece of the first-type power information comprises the power headroom and P_{CMAX,f,c}.

As one embodiment, one piece of the first-type power information comprises P_{CMAX,f,c}.

As one embodiment, one piece of the first-type power information is one octet comprising the power headroom.

As one embodiment, one piece of the first-type power information is at least one octet comprising the power headroom.

As one embodiment, one piece of the first-type power information is one octet comprising P_{CMAX,f,c}.

As one embodiment, one piece of the first-type power information is at least one octet comprising P_{CMAX,f,c}.

As one embodiment, one piece of the first-type power information is at least one octet comprising the power headroom and P_{CMAX,f,c}.

As one embodiment, one piece of the first-type power information is one octet comprising the power headroom offset and P_{CMAX,f,c}.

As one embodiment, one piece of the first-type power information is at least one octet comprising the power headroom offset and P_{CMAX,f,c}.

As one embodiment, one piece of the first-type power information is one octet comprising the power headroom offset.

As one embodiment, one piece of the first-type power information is at least one octet comprising the power headroom offset.

As one embodiment, the power headroom offset in one piece of the first-type power information is an offset for one power headroom.

As one embodiment, the offset refers to an increment.

As one embodiment, the offset refers to a decrease.

As one embodiment, the offset is one positive number.

As one embodiment, the offset is one negative number.

As one embodiment, the offset is one non-positive number.

As one embodiment, the offset is one non-negative number.

As one embodiment, the first-type power information of the first serving cell comprises a third power value, and only the latter of the first waveform and the second waveform is used for determining the third power value.

As one sub-embodiment of the present embodiment, the third power value is a second power value.

As one sub-embodiment of the present embodiment, the third power value is one power value related to only the latter of the first waveform and the second waveform.

As one sub-embodiment of the present embodiment, the third power value is one power headroom.

As one sub-embodiment of the present embodiment, the third power value is one P_{CMAX,f,c}(i).

As one sub-embodiment of the present embodiment, a calculation formula of the third power value is related to only the latter of the first waveform and the second waveform.

As one sub-embodiment of the present embodiment, parameters of only the latter of the first waveform and the second waveform are used for determining the third power value.

As one embodiment, the first-type power information of the first serving cell comprises the third power value, and the first waveform and the second waveform are used for determining the third power value.

As one sub-embodiment of the present embodiment, the third power value is a difference of one power headroom.

As one sub-embodiment of the present embodiment, the third power value is the difference of one P_{CMAX,f,c}.

As one sub-embodiment of the present embodiment, the third power value is an absolute value of the difference of one power headroom.

As one sub-embodiment of the present embodiment, the third power value is the absolute value of the difference of one P_{CMAX,f,c}.

As one sub-embodiment of the present embodiment, the third power value is the difference between the second power value and the first power value.

As one sub-embodiment of the present embodiment, the third power value is the absolute value of the difference between the second power value and the first power value.

As one sub-embodiment of the present embodiment, the third power value is one power value related to both the first waveform and the second waveform.

As one sub-embodiment of the present embodiment, the third power value is the difference between a first power headroom and a second power headroom, only the former of the first waveform and the second waveform is used for determining the first power headroom, and only the latter of the first waveform and the second waveform is used for determining the second power headroom.

As one sub-embodiment of the present embodiment, a fourth power value is the difference between a first P_{CMAX,f,c} and a second P_{CMAX,f,c}, only the former of the first waveform and the second waveform is used for determining the first P_{CMAX,f,c}, and only the latter of the first waveform and the second waveform is used for determining the second P_{CMAX,f,c}.

As one sub-embodiment of the present embodiment, the calculation formula of the third power value is related to both the first waveform and the second waveform.

As one sub-embodiment of the present embodiment, the parameters of the first waveform and the second waveform are used for determining the third power value.

As one embodiment, the first MAC CE comprises the second-type power information of the first serving cell.

As one sub-embodiment of the present embodiment, the second-type power information of the first serving cell comprises a second PH and the second P_{CMAX,f,c}.

As one sub-embodiment of the present embodiment, the second PH is one power headroom level.

As one sub-embodiment of the present embodiment, the second P_{CMAX,f,c} is used for calculating P_{CMAX,f,c} of a first PH.

As one embodiment, the first MAC CE does not comprise the second-type power information of the first serving cell.

As one embodiment, both the first waveform and the second waveform are used for a PUSCH of the first serving cell.

As one embodiment, the first waveform and the second waveform are not simultaneously used for the PUSCH of the first serving cell.

As one embodiment, the first waveform and the second waveform are not simultaneously used for the same PUSCH of the first serving cell.

As one embodiment, the first waveform and the second waveform are not simultaneously used for the PUSCH of the first serving cell scheduled by one piece of DCI.

As one embodiment, the first waveform is a DFT-S-OFDM and the second waveform is a CP-OFDM.

As one embodiment, the first waveform is the CP-OFDM and the second waveform is the DFT-S-OFDM.

As one embodiment, the first waveform is the current waveform of the uplink of the first serving cell, and the second waveform is the target waveform of the uplink of the first serving cell.

As one embodiment, the uplink of the first serving cell uses the first waveform without depending on the DCI, and the uplink of the first serving cell uses the second waveform depending on the DCI.

As one embodiment, when the DCI used for scheduling the PUSCH does not indicate the second waveform, the PUSCH scheduled by the DCI of the first serving cell uses the first waveform.

As one embodiment, when the DCI used for scheduling the PUSCH indicates the second waveform, the PUSCH scheduled by the DCI of the first serving cell uses the second waveform.

As one embodiment, the first-type power information of the first serving cell comprises the first PH and the first P_{CMAX,f,c}.

As one embodiment, the first-type power information of the first serving cell is the octet to which the first PH belongs and the octet to which the first P_{CMAX,f,c} belongs.

As one embodiment, the first PH is one power headroom level.

As one embodiment, the first P_{CMAX,f,c} is used for calculating P_{CMAX,f,c} of the first PH.

As one embodiment, the first PH is one PH calculated based on the second waveform.

As one embodiment, the first P_{CMAX,f,c} is one P_{CMAX,f,c} calculated based on the second waveform.

As one embodiment, the first MAC CE does not comprise the second-type power information of the first serving cell.

As one embodiment, the first MAC CE comprises the second-type power information of the first serving cell.

As one embodiment, the second-type power information of the first serving cell comprises the second PH and the second P_{CMAX,f,c}.

As one embodiment, the second-type power information of the first serving cell is the octet to which the second PH belongs and the octet to which the second P_{CMAX,f,c} belongs.

As one embodiment, the second PH is one power headroom level.

As one embodiment, the second P_{CMAX,f,c} is used for calculating P_{CMAX,f,c} of the first PH.

As one embodiment, the second PH is one PH calculated based on the first waveform.

As one embodiment, the second P_{CMAX,f,c} is one P_{CMAX,f,c} calculated based on the first waveform.

As one embodiment, the calculation formula of one P_{CMAX,f,c} refers to TS 38.213.

As one embodiment, the calculation formula of one PH refers to TS 38.213.

### Embodiment 2

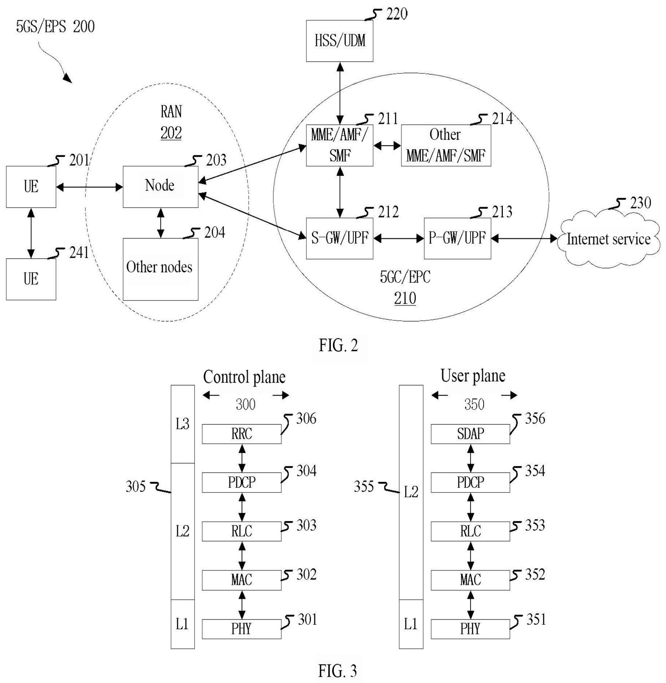

Embodiment 2 illustrates a schematic diagram of a network architecture according to one embodiment of the present application, as shown in FIG. 2. FIG. 2 illustrates a network architecture 200 of a 5G New Radio (NR)/Long-Term Evolution (LTE)/Long-Term Evolution Advanced (LTE-A) system. The 5G NR/LTE/LTE-A network architecture 200 may be referred to as a 5G System (5GS)/Evolved Packet System (EPS) 200 or some other suitable terminologies. The 5GS/EPS 200 comprises at least one of a piece of user equipment (UE) 201, a radio access network (RAN) 202, a 5G core network (5GC)/evolved packet core (EPC) 210, a home subscriber server (HSS)/unified data management (UDM) 220, and an Internet service 230. The 5GS/EPS may be interconnected with other access networks, but these entities/interfaces are not shown for simplicity. As shown in the figure, the 5GS/EPS provides packet switching services, however those skilled in the art will readily understand that various concepts presented throughout the present application can be extended to networks or other cellular networks that provide circuit switching services. The RAN comprises a node 203 and other nodes 204. The node 203 provides user and control plane protocol termination towards the UE201. The node 203 may be connected to the other nodes 204 via an Xn interface (e.g., backhaul)/X2 interface. The Node 203 may also be referred to as a base station, a base transceiver station, a radio base station, a radio transceiving device, a transceiving device function, a basic service set (BSS), an extended service set (ESS), a transmitter receiver point (TRP), or some other suitable terminologies. The node 203 provides an access point to the 5GC/EPC210 for the UE201. Examples of the UE201 comprise cellular telephones, smart phones, session initiation protocol (SIP) telephones, laptops, personal digital assistants (PDA), satellite radios, non-terrestrial base station communication, satellite mobile communication, global positioning systems, multimedia apparatuses, video apparatuses, digital audio players (e.g., MP3 players), cameras, game consoles, drones, aircrafts, narrowband IoT devices, machine type communication devices, land vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to Internet service 230. The Internet service 230 comprises an Internet protocol service corresponding to an operator, and may specifically comprise the Internet, an intranet, an IMS (IP Multimedia Subsystem) and a packet switching streaming service.

As one embodiment, the UE201 corresponds to a first node in the present application.

As one embodiment, the UE201 is one piece of user equipment (UE).

As one embodiment, the node 203 corresponds to a second node in the present application.

As one embodiment, the node 203 is one base station device (BS).

As one embodiment, the node 203 is one base transceiver station (BTS).

As one embodiment, the node 203 is one node B (NodeB, NB).

As one embodiment, the node 203 is one gNB.

As one embodiment, the node 203 is one eNB.

As one embodiment, the node 203 is one ng-eNB.

As one embodiment, the node 203 is one en-gNB.

As one embodiment, the node 203 is one CU (Centralized Unit).

As one embodiment, the node 203 is one DU (Distributed Unit).

As one embodiment, the node 203 is user equipment.

As one embodiment, the node 203 is one relay.

As one embodiment, the node 203 is a gateway.

As one embodiment, the user equipment supports a transmission in a terrestrial network (TN).

As one embodiment, the user equipment supports the transmission in a non-terrestrial network (NTN).

As one embodiment, the user equipment supports the transmission in a large delay difference network.

As one embodiment, the user equipment supports dual connection (DC) transmission.

As one embodiment, the user equipment comprises the aircraft.

As one embodiment, the user equipment comprises a vehicle-mounted terminal.

As one embodiment, the user equipment comprises a vessel.

As one embodiment, the user equipment comprises an Internet of Things terminal.

As one embodiment, the user equipment comprises an industrial Internet of Things terminal.

As one embodiment, the user equipment comprises a device that supports low-delay and high-reliability transmission.

As one embodiment, the user equipment comprises a test device.

As one embodiment, the user equipment comprises a signaling tester.

As one embodiment, the base station device supports the transmission in the non-terrestrial network.

As one embodiment, the base station device supports the transmission in the large delay difference network.

As one embodiment, the base station device supports the transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a base station device that supports the large delay difference.

As one embodiment, the base station device comprises a flight platform device.

As one embodiment, the base station device comprises a satellite device.

As one embodiment, the base station device comprises the TRP (Transmitter Receiver Point).

As one embodiment, the base station device comprises the CU.

As one embodiment, the base station device comprises the DU.

As one embodiment, the base station device comprises the test device.

As one embodiment, the base station device comprises the signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 illustrates a schematic diagram of an embodiment of a radio protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 in three layers: a Layer 1, a Layer 2, and a Layer 3. The Layer 1 (L1 layer) is the lowest layer and implements various PHY (physical layer) signal processing functions. The L1 layer will be referred to herein as a PHY301 herein. The layer 2 (L2 layer) 305 is above the PHY301 and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logic channels and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling. The radio protocol architecture for the user plane 350 comprises the Layer 1 (L1 layer) and the Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRB) to support the diversity of services.

As one embodiment, the radio protocol architecture in FIG. 3 is applicable to a first node in the present application.

As one embodiment, the radio protocol architecture in FIG. 3 is applicable to a second node in the present application.

As one embodiment, a first RRC message in the present application is generated at the RRC306.

As one embodiment, a first MAC subPDU in the present application is generated at the MAC302 or MAC352.

As one embodiment, a first MAC CE in the present application is generated at the MAC302 or MAC352.

As one embodiment, first DCI in the present application is generated in the PHY301 or PHY351.

As one embodiment, a first threshold in the present application is generated at the RRC306.

As one embodiment, the first threshold in the present application is generated at the MAC302 or MAC352.

As one embodiment, the first threshold in the present application is generated at the PHY301 or PHY351.

As one embodiment, a second threshold in the present application is generated at the RRC306.

As one embodiment, the second threshold in the present application is generated at the MAC302 or MAC352.

As one embodiment, the second threshold in the present application is generated at the PHY301 or PHY351.

As one embodiment, a third threshold in the present application is generated at the RRC306.

As one embodiment, the third threshold in the present application is generated at the MAC302 or MAC352.

As one embodiment, the third threshold in the present application is generated at the PHY301 or PHY351.

### Embodiment 4

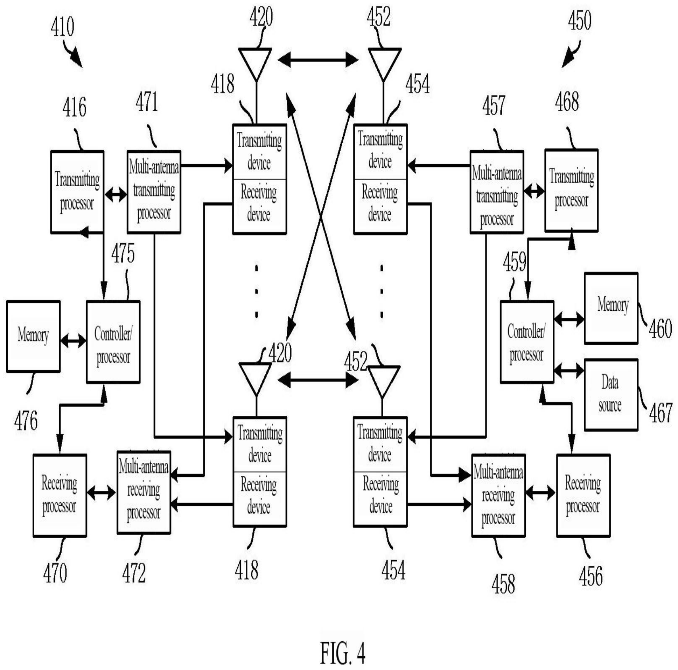

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical channels and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal clusters based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding of encoded and modulated symbols, comprising codebook-based precoding and non-codebook-based precoding, and beamforming processing to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to produce a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. Symbols on each spatial stream are demodulated and recovered in the receiving processor 456, and soft decisions are generated. Subsequently, the receiving processor 456 decodes and deinterleaves the soft decision to recover the upper-layer data and a control signal transmitted by the second communication device 410 on the physical channel. The upper-layer data and the control signal are then provided to the controller/processor 459. The controller/processor 459 implements the functions of the L2 layer. The controller/processor 459 may be associated with the memory 460 that stores program codes and data. The memory 460 may be referred to as a computer-readable medium. In the transmission from the second communication device 410 to the second communication device 450, the controller/processor 459 provides demultiplexing between transport channels and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In a transmission from the first communication device 450 to the second communication device 410, at the first communication device 450, the data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical channels and transport channels based on radio resource allocation, and implements the functions of the L2 layer for the user plane and the control plane. The controller/processor 459 is also responsible for retransmission of lost packets and signalings to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts the baseband symbol stream provided by the multi-antenna transmitting processor 457 into the radio frequency stream, which is then provided to different antennas 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 that stores program codes and data. The memory 476 may be referred to as a computer-readable medium. In the transmission from the first communication device 450 to the second communication device 410, the controller/processor 475 provides demultiplexing between transport channels and logical channels, packet reassembly, decryption, header decompression, and control signal processing to recover upper-layer data packets from UE450. The upper-layer data packets from the controller/processor 475 may be provided to the core network.

As one embodiment, the first communication device 450 comprises: at least one processor and at least one memory, the at least one memory comprising a computer program code; the at least one memory and the computer program code are configured to be used together with the at least one processor, and the first communication device 450 at least: receives a first RRC message, the first RRC message indicating a first waveform and a second waveform for an uplink of a first serving cell; and sends a first MAC subPDU, the first MAC subPDU comprising a first MAC CE and a first field, wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

As one embodiment, the first communication device 450 comprises: a memory that stores a computer-readable instruction program, the computer-readable instruction program generates actions when executed by at least one processor, and the actions comprise: receiving the first RRC message, the first RRC message indicating the first waveform and the second waveform for the uplink of the first serving cell; and sending the first MAC subPDU, the first MAC subPDU comprising the first MAC CE and the first field, wherein at least the first field of the first MAC subPDU among both the first field of the first MAC subPDU and the first RRC message is used for determining that the first MAC CE comprises the first-type power information of the first serving cell, and the first-type power information of the first serving cell is related to at least the second waveform among both the first waveform and the second waveform; and the first waveform and the second waveform are different.

As one embodiment, the second communication device 410 comprises: at least one processor and at least one memory, the at least one memory comprising computer program codes; and the at least one memory and the computer program codes are configured to be used together with the at least one processor. The second communication device 410 at least: sends the first RRC message, the first RRC message indicating the first waveform and the second waveform for the uplink of the first serving cell; and receives the first MAC subPDU, the first MAC subPDU comprising the first MAC CE and the first field, wherein at least the first field of the first MAC subPDU among both the first field of the first MAC subPDU and the first RRC message is used for determining that the first MAC CE comprises the first-type power information of the first serving cell, and the first-type power information of the first serving cell is related to at least the second waveform among both the first waveform and the second waveform; and the first waveform and the second waveform are different.

As one embodiment, the second communication device 410 comprises: a memory that stores the computer-readable instruction program, the computer-readable instruction program generates actions when executed by at least one processor, the actions comprise: sending the first RRC message, the first RRC message indicating the first waveform and the second waveform for the uplink of the first serving cell; and receiving the first MAC subPDU, the first MAC subPDU comprising the first MAC CE and the first field, wherein at least the first field of the first MAC subPDU among both the first field of the first MAC subPDU and the first RRC message is used for determining that the first MAC CE comprises the first-type power information of the first serving cell, and the first-type power information of the first serving cell is related to at least the second waveform among both the first waveform and the second waveform; and the first waveform and the second waveform are different.

As one embodiment, at least one of the antenna 452, the receiving device 454, the receiving processor 456, and the controller/processor 459 is used for receiving the first RRC message.

As one embodiment, at least one of the antenna 420, the transmitting device 418, the transmitting processor 416, and the controller/processor 475 is used for sending the first RRC message.

As one embodiment, at least one of the antenna 452, the receiving device 454, the receiving processor 456, and the controller/processor 459 is used for receiving first DCI.

As one embodiment, at least one of the antenna 420, the transmitting device 418, the transmitting processor 416, and the controller/processor 475 is used for sending the first DCI.

As one embodiment, at least one of the antenna 452, the receiving device 454, the receiving processor 456, and the controller/processor 459 is used for receiving a first threshold.

As one embodiment, at least one of the antenna 420, the transmitting device 418, the transmitting processor 416, and the controller/processor 475 is used for sending the first threshold.

As one embodiment, at least one of the antenna 452, the receiving device 454, the receiving processor 456, and the controller/processor 459 is used for receiving a second threshold.

As one embodiment, at least one of the antenna 420, the transmitting device 418, the transmitting processor 416, and the controller/processor 475 is used for sending the second threshold.

As one embodiment, at least one of the antenna 452, the receiving device 454, the receiving processor 456, and the controller/processor 459 is used for receiving a third threshold.

As one embodiment, at least one of the antenna 420, the transmitting device 418, the transmitting processor 416, and the controller/processor 475 is used for sending the third threshold.

As one embodiment, at least one of the antenna 452, the transmitting device 454, the transmitting processor 468, and the controller/processor 459 is used for sending the first MAC subPDU.

As one embodiment, at least one of the antenna 420, the receiving device 418, the receiving processor 470, and the controller/processor 475 is used for receiving the first MAC subPDU.

As one embodiment, at least one of the antenna 452, the transmitting device 454, the transmitting processor 468, and the controller/processor 459 is used for sending the first MAC CE.

As one embodiment, at least one of the antenna 420, the receiving device 418, the receiving processor 470, and the controller/processor 475 is used for receiving the first MAC CE.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the second communication device 410 is one piece of user equipment.

As one embodiment, the second communication device 410 is one base station device.

### Embodiment 5

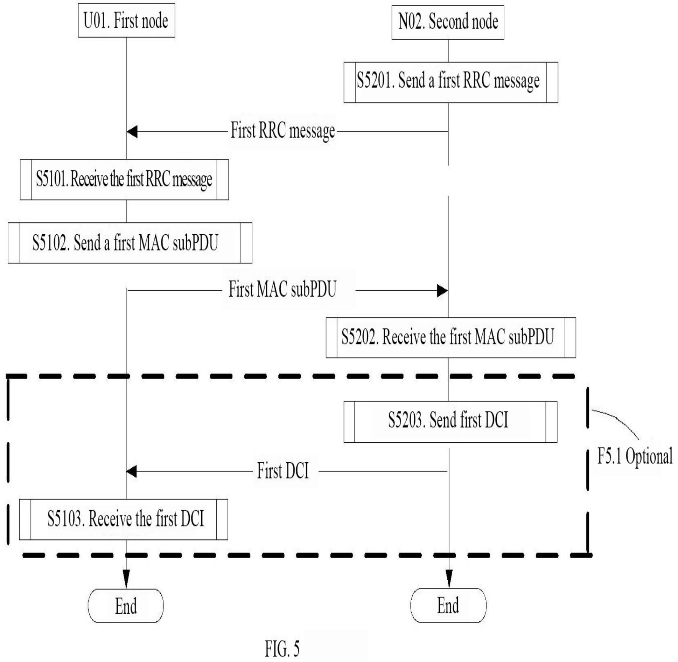

Embodiment 5 illustrates a flowchart of wireless signal transmission according to one embodiment of the present application, as shown in FIG. 5. It should be particularly noted that the order in this example does not limit the signal transmission order and implementation order in the present application.

For **a first node U01**, in step S5101, a first RRC message is received, the first RRC message indicating a first waveform and a second waveform for an uplink of a first serving cell; in step S5102, a first MAC subPDU is sent, the first MAC subPDU comprising a first MAC CE and a first field; and in step S5103, first DCI is received, the first DCI being used for scheduling a PUSCH.

For **a second node N02**, in step S5201, the first RRC message is sent; in step S5202, the first MAC subPDU is received; and in step S5203, the first DCI is sent.

In Embodiment 5, at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; the first waveform and the second waveform are different; and the first DCI comprises a second field, the second field indicating that the second waveform is used for the PUSCH scheduled by the first DCI.

As one embodiment, it is particularly noted that this example does not limit the order of the step S5102 and the step S5103.

As one embodiment, the step S5102 is before the step S5103.

As one embodiment, the step S5102 is after the step S5103.

As one embodiment, a dotted box F5.1 is optional.

As one embodiment, the dotted box F5.1 exists.

As one embodiment, the dotted box F5.1 does not exist.

As one embodiment, a behavior of sending the first MAC subPDU is used for triggering the first DCI.

As one embodiment, the first DCI is used for triggering the behavior of sending the first MAC subPDU.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the second node N02 is an MN (Master Node).

As one embodiment, the second node N02 is an SN (Secondary Node).

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

As one embodiment, the first DCI is identified by a first RNTI (Radio Network Temporary Identity).

As one embodiment, a CRC (Cyclic redundancy check) of the first DCI is scrambled by the first RNTI.

As one embodiment, the first DCI is addressed to the first RNTI.

As one embodiment, the first RNTI indicates the first node U01.

As one embodiment, the first RNTI is a C (Cell)-RNTI of the first node U01.

As one embodiment, the first RNTI is a CS (Configured Scheduling)-RNTI of the first node U01.

As one embodiment, the first RNTI is an MCS (Modulation and coding scheme)-C-RNTI of the first node U01.

As one embodiment, the first RNTI is the C-RNTI of the first node U01 in the first serving cell.

As one embodiment, the first RNTI is the C-RNTI of the first node U01 in a cell group to which the first serving cell belongs.

As one embodiment, the first RNTI is one TC-RNTI (Temporary C-RNTI).

As one embodiment, the first RNTI is one MSGB (Message B)-RNTI.

As one embodiment, a format of the first DCI is a DCI format 0_0.

As one embodiment, the format of the first DCI is a DCI format 0_1.

As one embodiment, the first DCI comprises at least one of one Frequency domain resource assignment field, one Time domain resource assignment field, one Modulation and coding scheme field, one New data indicator field, one Redundancy version field, one HARQ process number field, and one TPC command for scheduled PUSCH field.

As one embodiment, the second field comprises only one bit.

As one embodiment, the second field comprises a plurality of bits.

As one embodiment, the second field is set to a second value.

As one embodiment, the second field is set to the second value for indicating that the second waveform is used for the PUSCH scheduled by the first DCI.

As one embodiment, the second field is set to the second value to be used for indicating the second waveform.

As one embodiment, the second field is set to the second value to be used for scheduling the second waveform.

As one embodiment, the second field is set to the second value to be used for indicating waveform switching.

As one embodiment, the second value is predefined.

As one embodiment, the second value is preconfigured.

As one embodiment, the second value is 1.

As one embodiment, the second value is one of 1 and 0.

As one embodiment, the second value is one of 11, 10, 01 and 00.

As one embodiment, in response to the first DCI being received, the second waveform is used.

As one embodiment, the behavior of using the second waveform comprises: using sending power corresponding to the second waveform.

As one embodiment, the behavior of using the second waveform comprises: sending the PUSCH using the second waveform.

As one embodiment, the behavior of using the second waveform comprises: using a transmission link corresponding to the second waveform.

As one embodiment, the first DCI comprises one ChannelAccess-Cpext field; and the second field is one field after the ChannelAccess-Cpext field in the first DCI.

As one embodiment, the first DCI comprises one UL/SUL indicator field; and the second field is one field after the UL/SUL indicator field in the first DCI.

As one embodiment, the first DCI comprises one UL/SUL indicator field; and the second field is one field after the UL/SUL indicator field in the first DCI.

As one embodiment, the first DCI comprises one TPC command for scheduled PUSCH field; and the second field is one field after the TPC command for scheduled PUSCH field in the first DCI.

As one embodiment, the first DCI comprises Padding bits; and the second field is one field after the Padding bits in the first DCI.

As one embodiment, the first DCI comprises a third field, and the third field indicating that the first DCI comprises the second field.

As one sub-embodiment of the present embodiment, the presence of the third field is used for indicating that the first DCI comprises the second field.

As one sub-embodiment of the present embodiment, the third field is set to a given value to be used for indicating that the first DCI comprises the second field.

As one sub-embodiment of the present embodiment, the given value is all 0.

As one sub-embodiment of the present embodiment, the given value is all 1.

As one sub-embodiment of the present embodiment, the third field comprises only one bit.

As one sub-embodiment of the present embodiment, the third field comprises a plurality of bits.

As one sub-embodiment of the present embodiment, the third field is one field before the second field.

As one sub-embodiment of the present embodiment, no bit exists between the third field and the second field.

As one sub-embodiment of the present embodiment, at least one bit exists between the third field and the second field.

As one sub-embodiment of the present embodiment, the first DCI comprises one frequency domain resource assignment field; and the third field is at least part of bits in the frequency domain resource assignment field in the first DCI.

As one sub-embodiment of the present embodiment, the first DCI comprises one time domain resource assignment field; and the third field is at least part of bits in the time domain resource assignment field in the first DCI.

As one sub-embodiment of the present embodiment, the first DCI comprises one ChannelAccess-Cpext field; and the third field is one field after the ChannelAccess-Cpext field in the first DCI.

As one sub-embodiment of the present embodiment, the first DCI comprises one UL/SUL indicator field; and the third field is one field after the UL/SUL indicator field in the first DCI.

As one sub-embodiment of the present embodiment, the first DCI comprises one TPC (Transmit power control) command for scheduled PUSCH field; and the third field is one field after the TPC command for scheduled PUSCH field in the first DCI.

As one embodiment, the first RRC message is used for determining that the first DCI comprises the second field.

As one sub-embodiment of the present embodiment, the first RRC message indicates the first waveform and the second waveform for the uplink of the first serving cell and is used for determining that the first DCI comprises the second field.

As one sub-embodiment of the present embodiment, the first RRC message enables dynamic waveform switching between the first waveform and the second waveform for the uplink of the first serving cell and is used for determining that the first DCI comprises the second field.

As one embodiment, the first field is used for determining that the first DCI comprises the second field.

As one sub-embodiment of the present embodiment, the behavior of sending the first MAC subPDU is used for triggering the first DCI.

### Embodiment 6

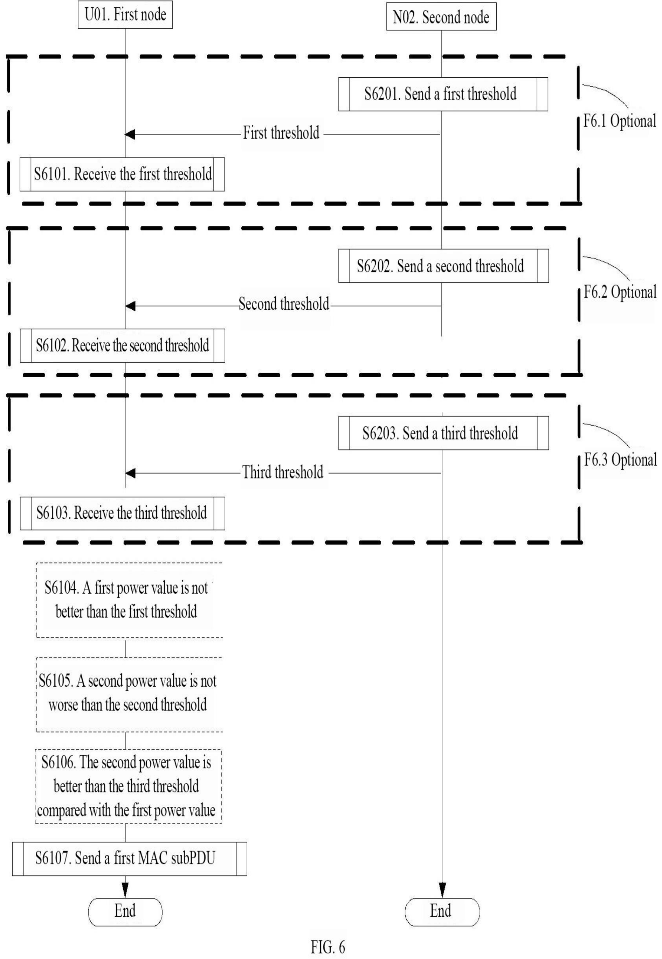

Embodiment 6 illustrates a flowchart of wireless signal transmission according to another embodiment of the present application, as shown in FIG. 6. It should be particularly noted that the order in this example does not limit the signal transmission order and implementation order in the present application.

For **a first node U01**, in step S6101, a first threshold is received, and only the former of a first waveform and a second waveform is used for determining a first power value; in step S6102, a second threshold is received, and only the latter of the first waveform and the second waveform is used for determining a second power value; in step S6103, a third threshold is received, only the former of the first waveform and the second waveform is used for determining the first power value, and only the latter of the first waveform and the second waveform is used for determining the second power value; in step S6104, it is determined that the first power value is not better than the first threshold; in step S6105, it is determined that the second power value is not worse than the second threshold; in step S6106, it is determined that the second power value is better than the third threshold compared with the first power value; and in step S6107, a first MAC subPDU is sent.

For **a second node N02**, in step S6201, the first threshold is sent; in step S6202, the second threshold is sent; and in step S6203, the third threshold is sent.

As one embodiment, at least one of a dotted box F6.1, a dotted box F6.2, and a dotted box F6.3 is optional.

As one embodiment, at least one of the dotted box F6.1, the dotted box F6.2, and the dotted box F6.3 exists.

As one embodiment, at least one of the step S6104, the step S6105, and the step S6106 is optional.

As one embodiment, at least one of the step S6104, the step S6105, and the step S6106 exists.

As one embodiment, the dotted box F6.1 and the step S6104 exist.

As one embodiment, the dotted box F6.2 and the step S6105 exist.

As one embodiment, the dotted box F6.3 and the step S6106 exist.

As one embodiment, the dotted box F6.1, the dotted box F6.2, the step S6104 and the step S6105 exist.

As one embodiment, the first power value being not better than the first threshold is used for triggering a behavior of sending the first MAC subPDU.

As one embodiment, the second power value being not worse than the second threshold is used for triggering the behavior of sending the first MAC subPDU.

As one embodiment, the first power value being not better than the first threshold and the second power value being not worse than the second threshold are used for triggering the behavior of sending a first MAC CE.

As one embodiment, "not better than" refers to "worse than".

As one embodiment, "not better than" refers to "worse than or equal to".

As one embodiment, "worse than" refers to "less than".

As one embodiment, "worse than" refers to "greater than".

As one embodiment, "not worse than" refers to "better than".

As one embodiment, "not worse than" refers to "better than or equal to".

As one embodiment, "better than" refers to "less than".

As one embodiment, "better than" refers to "greater than".

As one embodiment, the second power value being better than the third threshold compared with the first power value is used for triggering the behavior of sending the first MAC subPDU.

As one embodiment, the second power value being better than the third threshold compared with the first power value refers to: the second power value is greater than the third threshold compared with the first power value.

As one embodiment, the second power value being better than the third threshold compared with the first power value refers to: the second power value is less than the third threshold compared with the first power value.

As one embodiment, parameters of only the former of the first waveform and the second waveform are used for determining the first power value.

As one embodiment, the first power value depends on only the former of the first waveform and the second waveform.

As one embodiment, a calculation formula of the first power value is related to only the former of the first waveform and the second waveform.

As one embodiment, the first power value is one P_{CMAX,f,c} obtained based on only the former of the first waveform and the second waveform.

As one embodiment, the first power value is one PH obtained based on only the former of the first waveform and the second waveform.

As one embodiment, a unit of the first power value is dBm.

As one embodiment, the unit of the first power value is dB.

As one embodiment, the first power value is one power headroom level.

As one embodiment, the first power value is one numerical value.

As one embodiment, the first power value is one power value.

As one embodiment, the first power value is one maximum power value.

As one embodiment, the first power value is one power headroom offset.

As one embodiment, the first power value is one P_{CMAX,f,c}.

As one embodiment, the first power value is one PH.

As one embodiment, the parameters of only the latter of the first waveform and the second waveform are used for determining the second power value.

As one embodiment, the second power value depends on only the latter of the first waveform and the second waveform.

As one embodiment, the calculation formula of the second power value is related to only the latter of the first waveform and the second waveform.

As one embodiment, the second power value is one P_{CMAX,f,c} obtained based on only the latter of the first waveform and the second waveform.

As one embodiment, the second power value is one PH obtained based on only the latter of the first waveform and the second waveform.

As one embodiment, the unit of the second power value is dBm.

As one embodiment, the unit of the second power value is dB.

As one embodiment, the second power value is one power headroom level.

As one embodiment, the second power value is one numerical value.

As one embodiment, the second power value is one power value.

As one embodiment, the second power value is one maximum power value.

As one embodiment, the second power value is one power headroom offset.

As one embodiment, the second power value is one P_{CMAX,f,c}.

As one embodiment, the second power value is one PH.

### Embodiment 7

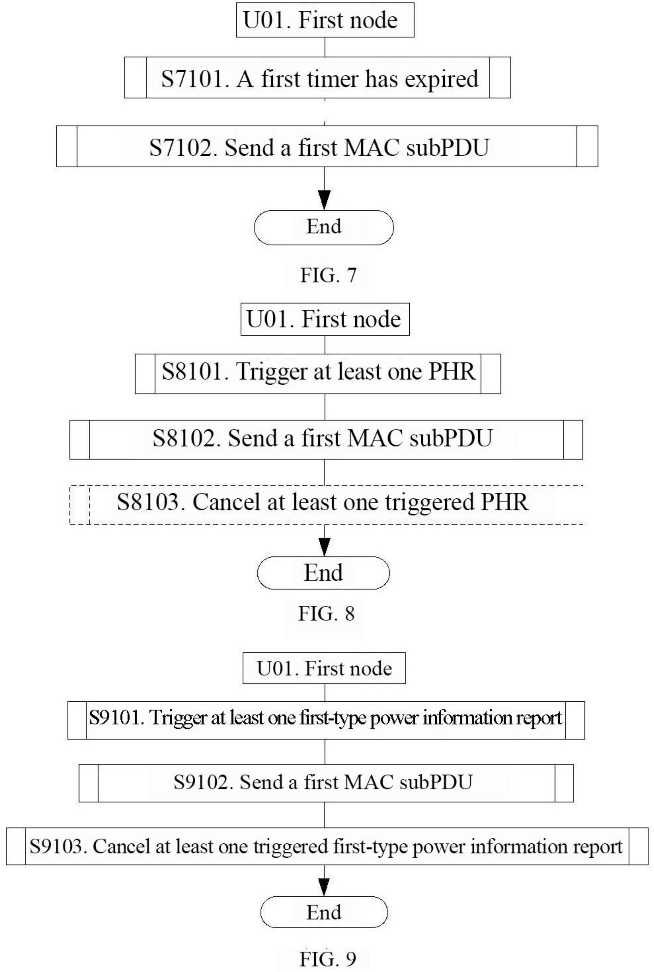

Embodiment 7 illustrates a flowchart in which a first timer having expired is used for triggering sending of a first MAC subPDU according to one embodiment of the present application, as shown in FIG. 7. It should be particularly noted that the order in this example does not limit the signal transmission order and implementation order in the present application.

For **a first node U01**, in step S7101, the first timer has expired; and in step S7102, the first MAC subPDU is sent.

In Embodiment 7, the first timer having expired is used for triggering a behavior of sending the first MAC subPDU.

As one embodiment, the first timer is one timer of an MAC sublayer.

As one embodiment, a name of the first timer comprises at least one of Prohibit or Timer.

As one embodiment, the name of the first timer comprises at least one of Periodic or the Timer.

As one embodiment, the name of the first timer comprises phr-ProhibitTimer.

As one embodiment, the name of the first timer comprises phr-PeriodicTimer.

As one embodiment, the name of the first timer is not any one of both the phr-ProhibitTimer and the phr-PeriodicTimer.

As one embodiment, the first timer is used for triggering one PHR.

As one sub-embodiment of the present embodiment, the first timer having expired is used for triggering one PHR.

As one sub-embodiment of the present embodiment, when the first timer has expired, one PHR is triggered.

As one sub-embodiment of the present embodiment, when the first timer expires or has expired and a change in path loss (PL) of at least one reference signal (RS) of a first serving cell for pathloss reference reaches or exceeds one threshold, one PHR is triggered; and the one threshold is configurable.

As one sub-embodiment of the present embodiment, when the first timer expires or has expired and the change in a PH calculated based on a first waveform and a PH calculated based on a second waveform exceeds one threshold, one PHR is triggered; and the one threshold is configurable.

As one sub-embodiment of the present embodiment, at least when the first timer expires or has expired, one PHR is triggered.

As one embodiment, the first timer is used for triggering one first-type power information report.

As one sub-embodiment of the present embodiment, the first timer having expired is not used for triggering the PHR.

As one sub-embodiment of the present embodiment, when the first timer has expired, one first-type power information report is triggered.

As one sub-embodiment of the present embodiment, when the first timer expires or has expired and the change in path loss of at least one reference signal of the first serving cell for pathloss reference reaches or exceeds one threshold, one first-type power information report is triggered; and the one threshold is configurable.

As one sub-embodiment of the present embodiment, when the first timer expires or has expired and the change in the PH calculated based on the first waveform and the PH calculated based on the second waveform exceeds one threshold, one first-type power information report is triggered; and the one threshold is configurable.

As one sub-embodiment of the present embodiment, in response to at least one first-type power information report being triggered, a first MAC CE is sent.

As one embodiment, the first timer is started along with the sending of one MAC CE.

As one embodiment, the first timer is started along with the sending of one PHR MAC CE identified by any candidate LCID index in a first candidate LCID index set.

As one embodiment, the first timer is started along with the sending of one MAC CE identified by any candidate LCID index in a second candidate LCID index set.

As one embodiment, the first timer is started along with the sending of one PHR MAC CE identified by any candidate LCID index in the first candidate LCID index set or the MAC CE identified by any candidate LCID index in the second candidate LCID index set.

### Embodiment 8

Embodiment 8 illustrates a flowchart in which at least one PHR is used for triggering sending of a first MAC subPDU according to one embodiment of the present application, as shown in FIG. 8. It should be particularly noted that the order in this example does not limit the signal transmission order and implementation order in the present application.

For **a first node U01**, in step S8101, at least one PHR is triggered; in step S8102, the first MAC subPDU is sent; and In step S8103, at least one triggered PHR is canceled along with sending of a behavior of the first MAC subPDU.

In Embodiment 8, the behavior of triggering at least one PHR is used for triggering the behavior of sending the first MAC subPDU.

As one embodiment, at least one PHR is triggered before the behavior of sending the first MAC subPDU.

As one embodiment, at least one PHR is triggered before the behavior of generating a first MAC CE.

As one embodiment, one phr-PeriodicTimer having expired is used for triggering one PHR.

As one embodiment, one phr-ProhibitTimer having expired is used for triggering one PHR.

As one embodiment, a first power value being not better than a first threshold is used for triggering one PHR.

As one embodiment, a second power value being not worse than a second threshold is used for triggering one PHR.

As one embodiment, the first power value being not better than the first threshold and the second power value being not worse than the second threshold are used for triggering one PHR.

As one embodiment, the second power value being better than a third threshold compared with the first power value is used for triggering one PHR.

As one embodiment, if a first waveform is a CP-OFDM, a first path loss exceeding a first path loss threshold is used for triggering one PHR; and the first path loss threshold is configurable.

As one embodiment, if the first waveform is a DFT-S-OFDM, the first path loss being lower than a second path loss threshold is used for triggering one PHR; and the second path loss threshold is configurable.

As one embodiment, the first path loss is a path loss of at least one reference signal used for pathloss reference.

As one embodiment, the first path loss threshold and the second path loss threshold are the same.

As one embodiment, the first path loss threshold and the second path loss threshold are different.

As one embodiment, the phr-PeriodicTimer having expired is used for triggering one PHR.

As one embodiment, the phr-ProhibitTimer having expired is used for triggering one PHR.

As one embodiment, an SCG is activated for triggering one PHR.

As one embodiment, the addition of a PSCell is used for triggering one PHR.

As one embodiment, BWP switching is used for triggering one PHR.

As one embodiment, the first timer having expired is used for triggering one PHR.

As one embodiment, the first timer having expired is not used for triggering one PHR.

As one embodiment, the step S8103 is optional.

As one embodiment, the step S8103 exists.

As one embodiment, the step S8103 does not exist.

As one embodiment, the behavior of canceling at least one triggered PHR refers to: canceling all triggered PHRs.

As one embodiment, the behavior of canceling at least one triggered PHR refers to: canceling one or more triggered PHRs.

As one embodiment, the behavior of canceling at least one triggered PHR refers to: canceling all triggered PHRs of all serving cells of the first node U01.

As one embodiment, the behavior of canceling at least one triggered PHR refers to: canceling all triggered PHRs of all serving cells associated with a cell group to which a first cell belongs for the first node U01.

As one embodiment, the behavior of canceling at least one triggered PHR refers to: canceling all triggered PHRs of a serving cell that reports a PH in the first MAC CE.

As one embodiment, the behavior of canceling at least one triggered PHR refers to: canceling all triggered PHRs of the serving cell corresponding to bits set to 1 in a first bitmap of the first MAC CE.

As one embodiment, the behavior of canceling at least one triggered PHR refers to: canceling all triggered PHRs of the serving cell corresponding to bits set to 1 in a second bitmap of the first MAC CE.

### Embodiment 9

Embodiment 9 illustrates a flowchart in which triggering at least one first-type power information report is used for triggering sending of a first MAC subPDU according to one embodiment of the present application, as shown in FIG. 9. It should be particularly noted that the order in this example does not limit the signal transmission order and implementation order in the present application.

For **a first node U01**, in step S9101, at least one first-type power information report is triggered; in step S9102, the first MAC subPDU is sent; and in step S9103, at least one triggered first-type power information report is canceled along with a behavior of sending the first MAC subPDU.

In Embodiment 9, the behavior of triggering at least one first-type power information report is used for triggering the behavior of sending the first MAC subPDU.

As one embodiment, at least one first-type power information report is triggered before the behavior of sending the first MAC subPDU.

As one embodiment, at least one first-type power information report is triggered before the behavior of generating a first MAC CE.

As one embodiment, a first timer having expired is used for triggering one first-type power information report.

As one embodiment, a first power value being not better than a first threshold is used for triggering one first-type power information report.

As one embodiment, a second power value being not worse than a second threshold is used for triggering one first-type power information report.

As one embodiment, the first power value being not better than the first threshold and the second power value being not worse than the second threshold are used for triggering one first-type power information report.

As one embodiment, the second power value being better than a third threshold compared with the first power value is used for triggering one first-type power information report.

As one embodiment, if a first waveform is a CP-OFDM, a first path loss exceeding a first path loss threshold is used for triggering one first-type power information report; and the first path loss threshold is configurable.

As one embodiment, if the first waveform is a DFT-S-OFDM, the first path loss being lower than a second path loss threshold is used for triggering one first-type power information report; and the second path loss threshold is configurable.

As one embodiment, the first path loss is a path loss of at least one reference signal used for pathloss reference.

As one embodiment, the first path loss threshold and the second path loss threshold are the same.

As one embodiment, the first path loss threshold and the second path loss threshold are different.

As one embodiment, the behavior of triggering at least one first-type power information report refers to: triggering only one first-type power information report.

As one embodiment, the behavior of triggering at least one first-type power information report refers to: triggering one or more first-type power information reports.

As one embodiment, the first timer having expired is used for triggering one first-type power information report.

As one embodiment, the behavior of canceling at least one triggered first-type power information report refers to: canceling all triggered first-type power information reports.

As one embodiment, the behavior of canceling at least one triggered first-type power information report refers to: canceling one or more triggered first-type power information reports.

As one embodiment, the behavior of canceling at least one triggered first-type power information report refers to: canceling all triggered first-type power information reports of all serving cells of the first node U01.

As one embodiment, the behavior of canceling at least one triggered first-type power information report refers to: canceling all triggered first-type power information reports of all serving cells associated with a cell group to which the first cell belongs for the first node U01.

As one embodiment, the behavior of canceling at least one triggered first-type power information report refers to: canceling all triggered first-type power information reports of serving cells for which PHs are reported in the first MAC CE.

As one embodiment, the behavior of canceling at least one triggered first-type power information report refers to: canceling all triggered first-type power information reports of serving cells corresponding to bits set to 1 in a first bitmap of the first MAC CE.

As one embodiment, the behavior of canceling at least one triggered first-type power information report refers to: canceling all triggered first-type power information reports of serving cells corresponding to bits set to 1 in a second bitmap of the first MAC CE.

### Embodiment 10

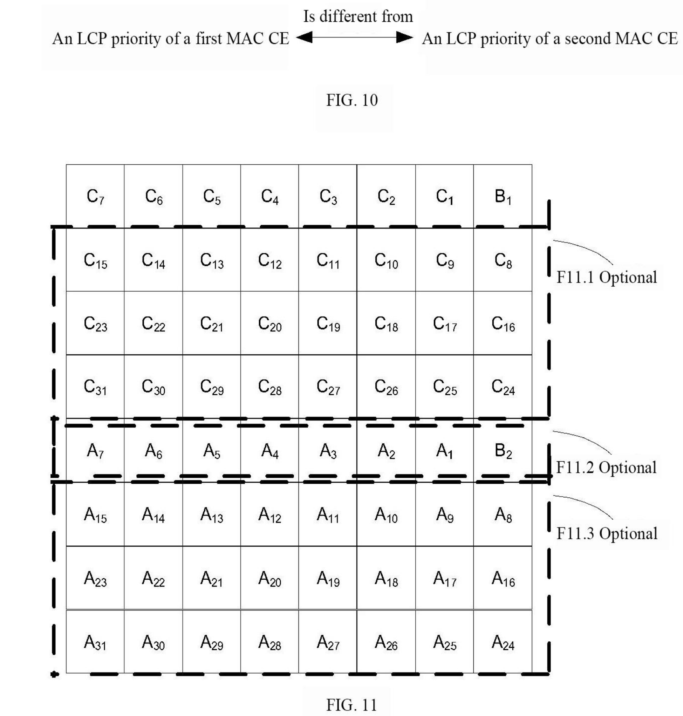

Embodiment 10 illustrates a schematic diagram in which an LCP priority of a first MAC CE and an LCP priority of a second MAC CE are different according to one embodiment of the present application, as shown in FIG. 10.

In Embodiment 10, the LCP priority of the first MAC CE and the LCP priority of the second MAC CE are different; and an index of an LCID corresponding to the second MAC CE is equal to 57.

As one embodiment, the second MAC CE is one PHR MAC CE.

As one embodiment, the second MAC CE is one Single Entry PHR MAC CE.

As one embodiment, the LCP priority of the first MAC CE refers to the order in which the first MAC CE is prioritized during the LCP process.

As one embodiment, the LCP priority of the second MAC CE refers to the order in which the second MAC CE is prioritized during the LCP process.

As one embodiment, the index of the LCID corresponding to the first MAC CE is one candidate LCID index in a second candidate LCID index set.

As one embodiment, one candidate LCID index in the second candidate LCID index set indicates the first MAC CE.

As one embodiment, the LCP priority of the first MAC CE is higher than the LCP priority of the second MAC CE.

As one sub-embodiment of the present embodiment, the LCP priority of the first MAC CE is lower than an MAC CE for a BSR (Buffer Status Report) other than a padding BSR.

As one sub-embodiment of the present embodiment, the LCP priority of the first MAC CE is lower than the MAC CE for a prioritized Sidelink BSR.

As one sub-embodiment of the present embodiment, the LCP priority of the first MAC CE is higher than the MAC CE for the BSR (Buffer Status Report) other than the padding BSR and lower than the MAC CE for the prioritized Sidelink BSR.

As one embodiment, the LCP priority of the first MAC CE is lower than the LCP priority of the second MAC CE.

As one sub-embodiment of the present embodiment, the LCP priority of the first MAC CE is higher than the MAC CE for a Positioning Measurement Gap Activation/Deactivation Request.

As one sub-embodiment of the present embodiment, the LCP priority of the first MAC CE is higher than the MAC CE for Desired Guard Symbols.

As one sub-embodiment of the present embodiment, the LCP priority of the first MAC CE is lower than the MAC CE for the Positioning Measurement Gap Activation/Deactivation Request and higher than the MAC CE for the Desired Guard Symbols.

### Embodiment 11

Embodiment 11 illustrates a schematic diagram of a bitmap in a first MAC CE according to one embodiment of the present application, as shown in FIG. 11. A Cₘ field belongs to a first bitmap, and an Aₙ field belongs to a second bitmap; a B₁ field belongs to an octet to which the first bitmap belongs; a B₂ field belongs to an octet to which the second bitmap belongs; and Cₘ, Aₙ, B₁ and B₂ in the present application are only for illustrating fields comprised in the first MAC CE, and do not limit names and positions of Cₘ, Aₙ, B₁ and B₂.

As one embodiment, a dotted box F11.1 is optional.

As one embodiment, a dotted box F11.2 is optional.

As one embodiment, a dotted box F11.3 is optional.

As one embodiment, the dotted box F11.1 exists, the dotted box F11.2 exists, and the dotted box F11.3 exists.

As one sub-embodiment of the present embodiment, m=1, 2, ..., 30, 31, n=1, 2, ..., 30, 31.

As one sub-embodiment of the present embodiment, the B₁ field is one R field, and the B₂ field is one R field.

As one sub-embodiment of the present embodiment, the B₁ field is not the R field, and the B₂ field is one R field.

As one sub-embodiment of the present embodiment, the B₁ field is one R field, and the B₂ field is not the R field.

As one sub-embodiment of the present embodiment, the B₁ field is not the R field, and the B₂ field is not the R field.

As one embodiment, the dotted box F11.1 exists, the dotted box F11.2 does not exist, and the dotted box F11.3 does not exist.

As one sub-embodiment of the present embodiment, m=1, 2, ..., 30, 31.

As one sub-embodiment of the present embodiment, the B₁ field is one R field.

As one sub-embodiment of the present embodiment, the B₁ field is not the R field.

As one embodiment, the dotted box F11.1 does not exist, the dotted box F11.2 exists, and the dotted box F11.3 does not exist.

As one sub-embodiment of the present embodiment, m=1, 2, ..., 6, 7, n=1, 2, ..., 6, 7.

As one sub-embodiment of the present embodiment, the B₁ field is one R field, and the B₂ field is one R field.

As one sub-embodiment of the present embodiment, the B₁ field is not the R field, and the B₂ field is one R field.

As one sub-embodiment of the present embodiment, the B₁ field is one R field, and the B₂ field is not the R field.

As one sub-embodiment of the present embodiment, the B₁ field is not the R field, and the B₂ field is not the R field.

As one embodiment, the dotted box F11.1 does not exist, the dotted box F11.2 does not exist, and the dotted box F11.3 does not exist.

As one sub-embodiment of the present embodiment, m=1, 2, ..., 6, 7.

As one sub-embodiment of the present embodiment, the B₁ field is one R field.

As one sub-embodiment of the present embodiment, the B₁ field is not the R field.

As one embodiment, the first MAC CE consists of the first bitmap.

As one embodiment, the first MAC CE consists of the first bitmap and the second bitmap.

As one embodiment, the first MAC CE comprises the first bitmap.

As one embodiment, the first MAC CE consists of the octet to which the first bitmap belongs and at least 1 piece of first-type power information.

As one embodiment, the first MAC CE consists of the octet to which the first bitmap belongs and at least 2 pieces of the first-type power information.

As one embodiment, the first MAC CE consists of the octet to which the first bitmap belongs, at least 1 piece of the first-type power information, and at least 1 piece of second-type power information.

As one embodiment, the first MAC CE consists of the octet to which the first bitmap belongs, at least 2 pieces of the first-type power information, and at least 2 pieces of the second-type power information.

As one embodiment, the first MAC CE comprises the octet to which the first bitmap belongs and the octet to which the second bitmap belongs.

As one embodiment, the first MAC CE consists of the octet to which the first bitmap belongs, the octet to which the second bitmap belongs, and at least 1 piece of the first-type power information.

As one embodiment, the first MAC CE consists of the octet to which the first bitmap belongs, the octet to which the second bitmap belongs, and at least 2 pieces of the first-type power information.

### Embodiment 12

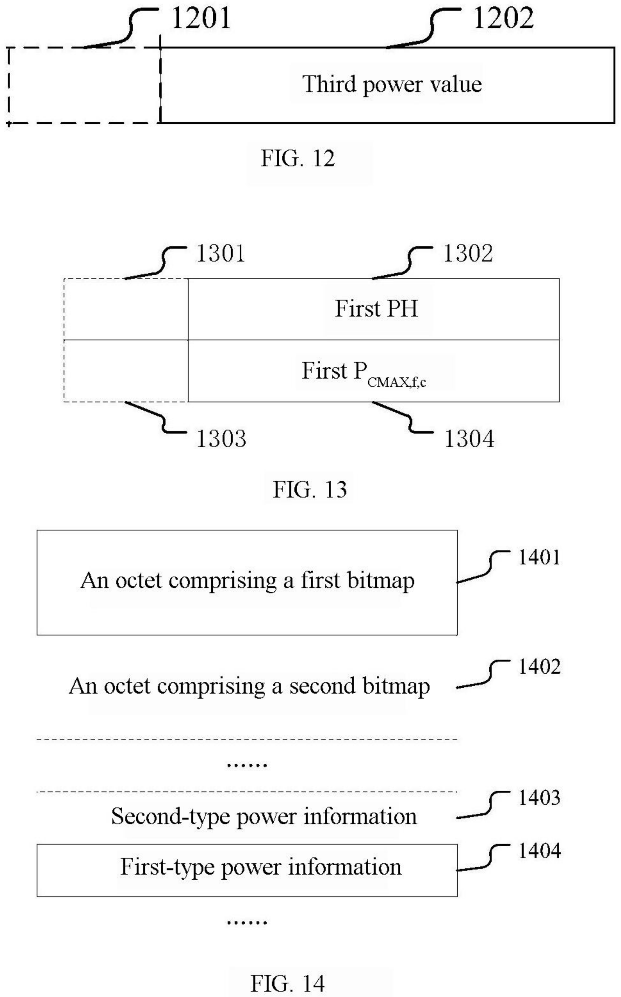

Embodiment 12 illustrates a schematic diagram of first-type power information of a first serving cell according to one embodiment of the present application, as shown in FIG. 12. A box 1202 is one field in a first MAC CE, and the first-type power information of the first serving cell comprises an octet to which the box 1202 belongs, and the field corresponding to the box 1202 indicates a third power value.

As one embodiment, a box 1201 is optional.

As one embodiment, the box 1201 exists.

As one embodiment, the box 1201 does not exist.

As one embodiment, the first-type power information of the first serving cell occupies only 1 octet.

As one embodiment, the first-type power information of the first serving cell occupies 2 octets.

As one embodiment, the first-type power information of the first serving cell occupies more octets.

As one embodiment, the first-type power information of the first serving cell consists of the box 1201 and the box 1202.

As one embodiment, the first-type power information of the first serving cell consists of the box 1202.

As one embodiment, the field corresponding to the box 1202 occupies 5 bits.

As one embodiment, the field corresponding to the box 1202 occupies 6 bits.

As one embodiment, the field corresponding to the box 1202 occupies 7 bits.

As one embodiment, the field corresponding to the box 1202 occupies 8 bits.

As one embodiment, the field corresponding to the box 1201 occupies 1 bit.

As one embodiment, the field corresponding to the box 1201 occupies 2 bits.

As one embodiment, the field corresponding to the box 1201 occupies 3 bits.

As one embodiment, the field corresponding to the box 1201 is one MPE field or an R field.

As one embodiment, the field corresponding to the box 1201 is the R field.

As one embodiment, the field corresponding to the box 1201 is one P domain and one R field.

As one embodiment, one bit of the field corresponding to the box 1201 indicates whether the third power value is one positive number or a negative number.

As one embodiment, one bit of the field corresponding to the box 1201 is the P field, and another bit indicates whether the third power value is one positive number or the negative number.

As one embodiment, the third power value is a first PH.

As one embodiment, the third power value is a first P_{CMAX,f,c}.

As one embodiment, the third power value is a difference between the first P_{CMAX,f,c} and a second P_{CMAX,f,c}.

As one embodiment, the third power value is the difference between the first PH and a second PH.

As one embodiment, the third power value is an absolute value of the difference between the first P_{CMAX,f,c} and the second P_{CMAX,f,c}.

As one embodiment, the third power value is the absolute value of the difference between the first PH and the second PH.

### Embodiment 13

Embodiment 13 illustrates a schematic diagram of first-type power information of a first serving cell according to another embodiment of the present application, as shown in FIG. 13. A box 1302 and a box 1304 are respectively one field in a first MAC CE. The first-type power information of the first serving cell comprises an octet to which a box 1202 and the box 1304 belong, a field corresponding to the box 1302 indicates a first PH, and the field corresponding to the box 1304 indicates a first P_{CMAX,f,c}.

As one embodiment, a box 1301 is optional.

As one embodiment, the box 1301 exists.

As one embodiment, the box 1301 is one P field and one R field.

As one embodiment, the box 1301 is 2 R fields.

As one embodiment, the box 1301 does not exist.

As one embodiment, a box 1303 is optional.

As one embodiment, the box 1303 exists.

As one embodiment, the box 1303 is one MPE field or the R field.

As one embodiment, the box 1303 is 2 R fields.

As one embodiment, the box 1303 does not exist.

### Embodiment 14

Embodiment 14 illustrates a schematic diagram of a first MAC CE according to one embodiment of the present application, as shown in FIG. 14. A box 1401 represents an octet comprising a first bitmap; a box 1402 represents the octet comprising a second bitmap; a box 1403 represents the octet comprising second-type power information of a first serving cell; a box 1404 represents the octet comprising first-type power information of the first serving cell; and The ellipsis indicates the octet comprising the first-type power information of other serving cells or the octet comprising the second-type power information of other serving cells.

As one embodiment, the box 1402 is optional.

As one embodiment, the box 1402 exists.

As one embodiment, the box 1402 does not exist.

As one embodiment, the box 1403 is optional.

As one embodiment, the box 1403 exists.

As one embodiment, the box 1403 does not exist.

As one embodiment, the present application does not limit whether the ellipsis exists.

As one embodiment, the present application does not limit positions of the first-type power information and the second-type power information of the same serving cell in the first MAC CE.

As one embodiment, no octet is comprised between the octet comprising the first-type power information of the first serving cell and the octet comprising the second-type power information of the first serving cell.

As one embodiment, the first MAC CE comprises the first-type power information of a PCell, and the first MAC CE does not comprise the second-type power information of the PCell.

As one sub-embodiment of the present embodiment, the first MAC CE always comprises the first-type power information of the PCell.

As one sub-embodiment of the present embodiment, a B₁ field is one R field.

As one sub-embodiment of the present embodiment, the B₁ field is not the R field.

As one embodiment, the first MAC CE comprises the first-type power information of a PSCell, and the first MAC CE does not comprise the second-type power information of the PSCell.

As one sub-embodiment of the present embodiment, the first MAC CE always comprises the first-type power information of the PSCell.

As one sub-embodiment of the present embodiment, the B₁ field is one R field.

As one sub-embodiment of the present embodiment, the B₁ field is not the R field.

As one embodiment, the first MAC CE comprises the first-type power information of the PCell and the second-type power information of the PCell.

As one sub-embodiment of the present embodiment, the first MAC CE always comprises the first-type power information of the PCell and the second-type power information of the PCell.

As one sub-embodiment of the present embodiment, the B₁ field is one R field.

As one sub-embodiment of the present embodiment, the B₁ field is not the R field.

As one sub-embodiment of the present embodiment, a B₂ field is one R field.

As one sub-embodiment of the present embodiment, the B₂ field is not the R field.

As one embodiment, the first MAC CE comprises the first-type power information of the PSCell and the second-type power information of the PSCell.

As one sub-embodiment of the present embodiment, the first MAC CE always comprises the first-type power information of the PSCell and the second-type power information of the PSCell.

As one sub-embodiment of the present embodiment, the B₁ field is one R field.

As one sub-embodiment of the present embodiment, the B₁ field is not the R field.

As one sub-embodiment of the present embodiment, the B₂ field is one R field.

As one sub-embodiment of the present embodiment, the B₂ field is not the R field.

As one embodiment, for the PCell, if the B₁ field is set to 1, the first MAC CE comprises the first-type power information of the PCell, and the first MAC CE does not comprise the second-type power information of the PCell; and if the B₁ field is set to 0, the first MAC CE does not comprise the first-type power information of the PCell, and the first MAC CE does not comprise the second-type power information of the PCell.

As one embodiment, for the PCell, if the B₁ field is set to 1, the first MAC CE comprises the first-type power information of the PCell and the second-type power information of the PCell; and if the B₁ field is set to 0, the first MAC CE does not comprise the first-type power information of the PCell and the second-type power information of the PCell.

As one embodiment, for the PSCell, if the B₂ field is set to 1, the first MAC CE comprises the first-type power information of the PSCell, and the first MAC CE does not comprise the second-type power information of the PSCell; and if the B₂ field is set to 0, the first MAC CE does not comprise the first-type power information of the PSCell, and the first MAC CE does not comprise the second-type power information of the PSCell.

As one embodiment, for the PSCell, if the B₂ field is set to 1, the first MAC CE comprises the first-type power information of the PSCell and the second-type power information of the PSCell; and if the B₂ field is set to 0, the first MAC CE does not comprise the first-type power information of the PSCell and the second-type power information of the PSCell.

As one embodiment, for a serving cell m, if a Cₘ field is set to 1, the first MAC CE comprises the first-type power information of the serving cell m, and the first MAC CE does not comprise the second-type power information of the serving cell m; and if the Cₘ field is set to 0, the first MAC CE does not comprise the first-type power information of the serving cell m, and the first MAC CE does not comprise the second-type power information of the serving cell m.

As one embodiment, for the serving cell m, if the Cₘ field is set to 1, the first MAC CE comprises the first-type power information of the serving cell m and the second-type power information of the serving cell m; and if the Cₘ field is set to 0, the first MAC CE does not comprise the first-type power information of the serving cell m and the second-type power information of the serving cell m.

As one embodiment, for the serving cell m, if the Cₘ field is set to 1, and an Aₙ field corresponding to the Cₘ field is set to 1, the first MAC CE comprises the first-type power information of the serving cell m and the second-type power information of the serving cell m;if the Cₘ field is set to 1, and the Aₙ field corresponding to the Cₘ field is set to 0, the first MAC CE comprises the second-type power information of the serving cell m, and the first MAC CE does not comprise the first-type power information of the serving cell m; and if the Cₘ field is set to 0, and the Aₙ field corresponding to the Cₘ field is set to 0, the first MAC CE does not comprise the first-type power information of the serving cell m and the second-type power information of the serving cell m.

As one embodiment, the serving cell m refers to a serving cell whose ServCellIndex is equal to m.

As one embodiment, the serving cell m refers to a SCell whose SCellIndex is equal to m.

### Embodiment 15

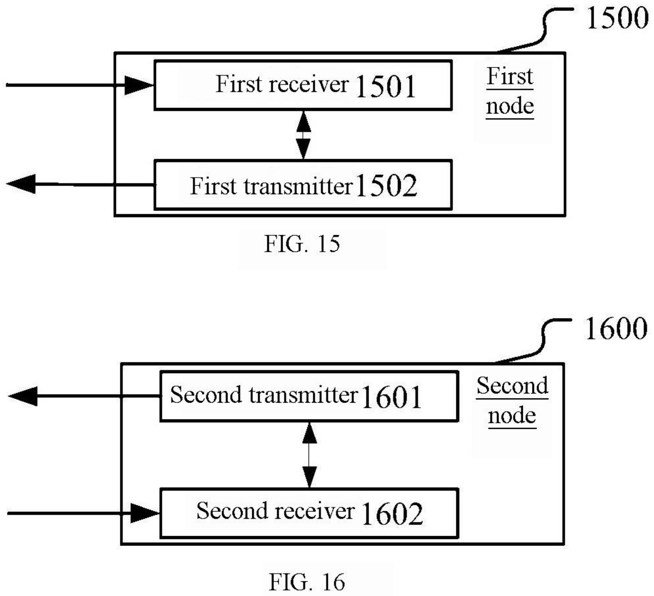

Embodiment 15 illustrates a structural block diagram of a processing apparatus for a first node according to one embodiment of the present application, as shown in FIG. 15. In FIG. 15, a processing apparatus 1500 in the first node comprises a first receiver 1501 and a first transmitter 1502.

The first receiver 1501 receives a first RRC message, the first RRC message indicating a first waveform and a second waveform for an uplink of a first serving cell; and
the first transmitter 1502 sends a first MAC subPDU, the first MAC subPDU comprising a first MAC CE and a first field.

In Embodiment 15, at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

As one embodiment, the first receiver 1501 receives first DCI, the first DCI being used for scheduling a PUSCH, wherein the first DCI comprises a second field, the second field indicating that the second waveform is used for the PUSCH scheduled by the first DCI.

As one embodiment, the first transmitter 1502, wherein a first timer has expired, wherein the first timer having expired is used for triggering a behavior of sending the first MAC subPDU.

As one embodiment, the first receiver 1501 receives a first threshold, wherein a first power value being not better than the first threshold is used for triggering the behavior of sending the first MAC subPDU; and only the former of the first waveform and the second waveform is used for determining the first power value.

As one embodiment, the first receiver 1501 receives a second threshold, wherein a second power value being not worse than the second threshold is used for triggering the behavior of sending the first MAC subPDU; and only the latter of the first waveform and the second waveform is used for determining the second power value.

As one embodiment, the first receiver 1501 receives a third threshold, wherein the second power value being better than the third threshold compared with the first power value is used for triggering the behavior of sending the first MAC subPDU; and only the former of the first waveform and the second waveform is used for determining the first power value, and only the latter of the first waveform and the second waveform is used for determining the second power value.

As one embodiment, the first transmitter 1502 triggers at least one PHR, wherein the behavior of triggering at least one PHR is used for triggering the behavior of sending the first MAC subPDU.

As one embodiment, the first transmitter 1502 cancels at least one triggered PHR along with the behavior of sending the first MAC subPDU.

As one embodiment, an LCP priority of the first MAC CE and an LCP priority of a second MAC CE are different; and an index of an LCID corresponding to the second MAC CE is equal to 57.

As one embodiment, the first receiver 1501 comprises an antenna 452, a receiving device 454, a multi-antenna receiving processor 458, a receiving processor 456, a controller/processor 459, a memory 460 and a data source 467 in FIG. 4 of the present application.

As one embodiment, the first receiver 1501 comprises the antenna 452, the receiving device 454, the multi-antenna receiving processor 458, and the receiving processor 456 in FIG. 4 of the present application.

As one embodiment, the first receiver 1501 comprises the antenna 452, the receiving device 454, and the receiving processor 456 in FIG. 4 of the present application.

As one embodiment, the first transmitter 1502 comprises the antenna 452, the transmitting device 454, a multi-antenna transmitting processor 457, a transmitting processor 468, the controller/processor 459, the memory 460 and the data source 467 in FIG. 4 of the present application.

As one embodiment, the first transmitter 1502 comprises the antenna 452, the transmitting device 454, the multi-antenna transmitting processor 457, and the transmitting processor 468 in FIG. 4 of the present application.

As one embodiment, the first transmitter 1502 comprises the antenna 452, the transmitting device 454, and the transmitting processor 468 in FIG. 4 of the present application.

### Embodiment 16

Embodiment 16 illustrates a structural block diagram of a processing apparatus for a second node according to one embodiment of the present application, as shown in FIG. 16. In FIG. 16, a processing apparatus 1600 in the second node comprises a second transmitter 1601 and a second receiver 1602.

The second transmitter 1601 sends a first RRC message, the first RRC message indicating a first waveform and a second waveform for an uplink of a first serving cell; and
the second receiver 1602 receives a first MAC subPDU, the first MAC subPDU comprising a first MAC CE and a first field.

In Embodiment 16, at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

As one embodiment, the second transmitter 1601 receives first DCI, the first DCI being used for scheduling a PUSCH, wherein the first DCI comprises a second field, the second field indicating that the second waveform is used for the PUSCH scheduled by the first DCI.

As one embodiment, a first timer having expired is used for triggering a behavior of sending the first MAC subPDU.

As one embodiment, the second transmitter 1601 sends a first threshold, wherein a first power value being not better than the first threshold is used for triggering the behavior of sending the first MAC subPDU; and only the former of the first waveform and the second waveform is used for determining the first power value.

As one embodiment, the second transmitter 1601 sends a second threshold, wherein a second power value being not worse than the second threshold is used for triggering the behavior of sending the first MAC subPDU; and only the latter of the first waveform and the second waveform is used for determining the second power value.

As one embodiment, the second transmitter 1601 sends a third threshold, wherein the second power value being better than the third threshold compared with the first power value is used for triggering the behavior of sending the first MAC subPDU; and only the former of the first waveform and the second waveform is used for determining the first power value, and only the latter of the first waveform and the second waveform is used for determining the second power value.

As one embodiment, at least one PHR is triggered; and the behavior of triggering at least one PHR is used for triggering the behavior of sending the first MAC subPDU.

As one embodiment, at least one triggered PHR is canceled along with sending of the first MAC subPDU.

As one embodiment, an LCP priority of the first MAC CE and an LCP priority of a second MAC CE are different; and an index of an LCID corresponding to the second MAC CE is equal to 57.

As one embodiment, the second transmitter 1601 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1601 comprises the antenna 420, the transmitting device 418, the multi-antenna transmitting processor 471, and the transmitting processor 416 in FIG. 4 of the present application.

As one embodiment, the second transmitter 1601 comprises the antenna 420, the transmitting device 418, and the transmitting processor 416 in FIG. 4 of the present application.

As one embodiment, the second receiver 1602 comprises the antenna 420, the receiving device 418, a multi-antenna receiving processor 472, a receiving processor 470, the controller/processor 475, and the memory 476 in FIG. 4 of the present application.

As one embodiment, the second receiver 1602 comprises the antenna 420, the receiving device 418, the multi-antenna receiving processor 472, and the receiving processor 470 in FIG. 4 of the present application.

As one embodiment, the second receiver 1602 comprises the antenna 420, the receiving device 418, and the receiving processor 470 in FIG. 4 of the present application.

Those skilled in the art can understand that all or part of the steps in the above method can be completed by instructing the relevant hardware by a program, and the program can be stored in a computer-readable storage medium, such as a read-only memory, a hard disk or an optical disk. Optionally, all or part of the steps in the above embodiments can also be implemented by using one or more integrated circuits. Correspondingly, each module unit in the above embodiments can be implemented in the form of hardware or in the form of a software function module. The present application is not limited to any specific form of combinations of software and hardware. In the present application, the user equipment, terminals and UE include but are not limited to drones, communication modules on drones, remote control airplanes, aircrafts, small airplanes, mobile phones, tablets, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablets and other wireless communication devices. The base station or system devices in the present application includes but are not limited to macro cellular base stations, micro cellular base stations, femtocells, relay base stations, gNBs (NR Node B), TRPs (Transmitter Receiver Points) and other wireless communication devices.

The above is only a preferred embodiment of the present application and is not used for limiting the scope of protection of the present application. Any modifications, equivalent replacements, improvements, etc. made within the spirit and principles of the present application should be comprised in the scope of protection of the present application.

## Claims

1. A first node for wireless communication, comprising:
a first receiver receiving a first RRC message, the first RRC message indicating a first waveform and a second waveform for an uplink of a first serving cell; and
a first transmitter sending a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

2. The first node according to claim 1, comprising:
the first receiver receiving first DCI, the first DCI being used for scheduling a PUSCH,
wherein the first DCI comprises a second field, and the second field indicates that the second waveform is used for the PUSCH scheduled by the first DCI.

3. The first node according to claim 1 or 2, comprising:
the first transmitter, wherein a first timer has expired,
wherein the first timer having expired is used for triggering a behavior of sending the first MAC subPDU.

4. The first node according to any one of claims 1 to 3, comprising:
the first receiver receiving a first threshold,
wherein a first power value being not better than the first threshold is used for triggering the behavior of sending the first MAC subPDU; and only the former of the first waveform and the second waveform is used for determining the first power value.

5. The first node according to any one of claims 1 to 4, comprising:
the first receiver receiving a second threshold,
wherein a second power value being not worse than the second threshold is used for triggering the behavior of sending the first MAC subPDU; and only the latter of the first waveform and the second waveform is used for determining the second power value.

6. The first node according to any one of claims 1 to 5, comprising:
the first receiver receiving a third threshold,
wherein the second power value being better than the third threshold compared with the first power value is used for triggering the behavior of sending the first MAC subPDU; and only the former of the first waveform and the second waveform is used for determining the first power value, and only the latter of the first waveform and the second waveform is used for determining the second power value.

7. The first node according to any one of claims 1 to 6, comprising:
the first transmitter triggering at least one PHR,
wherein a behavior of triggering at least one PHR is used for triggering the behavior of sending the first MAC subPDU.

8. The first node according to claim 7, comprising:
the first transmitter canceling at least one triggered PHR along with the behavior of sending the first MAC subPDU.

9. The first node according to any one of claims 1 to 8, wherein an LCP priority of the first MAC CE and an LCP priority of a second MAC CE are different; and an index of an LCID corresponding to the second MAC CE is equal to 57.

10. A second node for wireless communication, comprising:
a second transmitter sending a first RRC message, the first RRC message indicating a first waveform and a second waveform for an uplink of a first serving cell; and
a second receiver receiving a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

11. A method used in a first node for wireless communication, comprising:
receiving a first RRC message, the first RRC message indicating a first waveform and a second waveform for an uplink of a first serving cell; and
sending a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.

12. A method used in a second node for wireless communication, comprising:
sending a first RRC message, the first RRC message indicating a first waveform and a second waveform for an uplink of a first serving cell; and
receiving a first MAC subPDU, the first MAC subPDU comprising a first MAC CE and a first field,
wherein at least the first field of the first MAC subPDU among both the first field of the first MAC subPDU and the first RRC message is used for determining that the first MAC CE comprises first-type power information of the first serving cell, and the first-type power information of the first serving cell is related to at least the second waveform among both the first waveform and the second waveform; and the first waveform and the second waveform are different.
